(19) Europäisches Patentamt / European Patent Office / Office européen des brevets

(11) **EP 3 115 933 B1**

(12) **EUROPEAN PATENT SPECIFICATION**

(45) Date of publication and mention of the grant of the patent:
**17.03.2021 Bulletin 2021/11**

(51) Int Cl.:
***G06K 9/00*** *(2006.01)*

(21) Application number: **16178187.7**

(22) Date of filing: **06.07.2016**

(54) **IMAGE PROCESSING DEVICE, IMAGE CAPTURING DEVICE, MOBILE BODY CONTROL SYSTEM, IMAGE PROCESSING METHOD, AND COMPUTER-READABLE RECORDING MEDIUM**

BILDVERARBEITUNGSVORRICHTUNG, BILDERFASSUNGSVORRICHTUNG, STEUERUNGSSYSTEM FÜR BEWEGLICHEN KÖRPER, BILDVERARBEITUNGSVERFAHREN UND COMPUTERLESBARES AUFZEICHNUNGSMEDIUM

DISPOSITIF DE TRAITEMENT D'IMAGES, DISPOSITIF DE CAPTURE D'IMAGES, SYSTÈME DE COMMANDE DE CORPS MOBILE, PROCÉDÉ DE TRAITEMENT D'IMAGES ET SUPPORT D'ENREGISTREMENT LISIBLE SUR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.07.2015 JP 2015136544**
**06.05.2016 JP 2016093441**

(43) Date of publication of application:
**11.01.2017 Bulletin 2017/02**

(73) Proprietor: **Ricoh Company, Ltd.**
**Tokyo 143-8555 (JP)**

(72) Inventors:
- **AMANO, Seiya**
  **Tokyo, 143-8555 (JP)**
- **TAKAHASHI, Sadao**
  **Tokyo, 143-8555 (JP)**
- **YOKOTA, Soichiro**
  **Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**JP-A- 2015 075 800    US-A1- 2006 193 511**

- **M. Perrollaz et al.: "Proposition of Generic Validation Criteria using Stereo-Vision for On-Road Obstacle Detection", International Journal of Robotics and Automation, vol. 29, no. 1 January 2014 (2014-01), pages 1-26, XP002763857, Retrieved from the Internet: URL:https://www.researchgate.net/profile/R aphael_Labayrade/publication/273968718_Pro position_of_Generic_Validation_Criteria_us ing_stereo-vision_for_On-Road_Obstacle_Det ection/links/552fd76d0cf27acb0de7d859.pdf [retrieved on 2016-11-03]**
- **ILOIE ALEXANDRU ET AL: "UV disparity based obstacle detection and pedestrian classification in urban traffic scenarios", 2014 IEEE 10TH INTERNATIONAL CONFERENCE ON INTELLIGENT COMPUTER COMMUNICATION AND PROCESSING (ICCP), IEEE, 4 September 2014 (2014-09-04), pages 119-125, XP032671049, DOI: 10.1109/ICCP.2014.6936963 ISBN: 978-1-4799-6568-7 [retrieved on 2014-10-27]**
- **ZHENCHENG HU ET AL: "U-V-disparity: an efficient algorithm for stereovision based scene analysis", INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, PISCATAWAY, NJ, USA, 6 June 2005 (2005-06-06), pages 48-54, XP010833942, DOI: 10.1109/IVS.2005.1505076 ISBN: 978-0-7803-8961-8**

EP 3 115 933 B1

**Description**

BACKGROUND OF THE INVENTION

1. Field of the Invention

The present invention relates to an image processing device, an image capturing device, a mobile body control system, an image processing method, and a computer-readable recording medium.

2. Description of the Related Art

Recently widely known are technologies for detecting an object, such as a person or a car, at high speed based on a distance measured by a millimeter wave radar, a laser radar, or a stereo camera, for example. To detect the three-dimensional position and the size of an object, such as a person or a preceding vehicle, based on a distance measured by a stereo camera, for example, the technologies interpolate the disparity of the object, detect the position of a road surface, and detect the object in contact with the road surface. Output from the detection of the object is used to perform automatic braking control or automatic steering control, for example.

Japanese Laid-open Patent Publication No. 2014-096005 discloses an object detection device that accurately performs grouping to detect a single object. The object detection device groups valid regions using a depth map and divides the regions of the grouped objects based on outline portions (edges) in gray images.

PCT Publication No. WO2012/017650 discloses an object detection device that can accurately detect an object and a road surface. The object detection device detects a road surface region, detects data having a height equal to or higher than the road surface as an object candidate region, and determines whether the object candidate is an object or a road surface based on the shape characteristics.

The object detection device disclosed in Japanese Laid-open Patent Publication No. 2014-096005 may fail to correctly separate the objects grouped as one region when the objects have complex edges in the gray images. The object detection device disclosed in PCT Publication No. WO2012/017650 may detect adjacent objects in a connected manner in a region where objects having heights equal to or higher than the road surface can be present. As a result, it has been difficult for the object detection device disclosed in Japanese Laid-open Patent Publication No. 2014-096005 and the object detection device disclosed in PCT Publication No. WO2012/017650 to accurately detect an object.

In view of the disadvantages described above, there is a need to provide an image processing device, an image capturing device, a mobile body control system, an image processing method, and a computer-readable recording medium having a computer program that can accurately detect an object.

JP 2015 075800 A provides an object detection device capable of more accurately detecting a road surface and detecting an obstacle on the road surface more accurately than in the past even when a non-road surface area occupies a large number on the image and the road surface has a large gradient.

M. Perrollaz et al., International Journal of Robotics and Automation, vol.29, no.1 January 2014, pages 1-26 proposes to use stereo-vision as a post-process to improve the reliability of any obstacle detection system, by reducing the number of false positives.

Iloie Alexandru et al., 2014 IEEE 10th International Conference on Intelligent Computer Communication and Processing (ICCP), IEEE, 4 September 2014, pages 119-125 describes a system for detecting obstacles in front of an intelligent vehicle and classifying them in pedestrians and non-pedestrians.

SUMMARY OF THE INVENTION

It is an object of the present invention to at least partially solve the problems in the conventional technology.

The problem is solved by the subject-matter of the independent claims. The dependent claims are directed to embodiments of advantage.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

FIG. 1 is a diagram illustrating a schematic configuration of a mobile body control system according to an embodiment of the present invention;

**EP 3 115 933 B1**

FIG. 2 is a block diagram illustrating a schematic configuration of an image capturing unit and an analyzing unit;

FIG. 3 is a diagram illustrating a positional relation between a subject and image capturing lenses of respective image capture parts in an X-Z plane;

FIG. 4 is a functional block diagram illustrating various functions of the mobile body control system according to the embodiment;

FIG. 5 is a diagram of a captured image obtained by the image capturing unit;

FIG. 6 is a diagram of a V-map corresponding to the captured image illustrated in FIG. 5;

FIG. 7 is a diagram of an example of a captured image;

FIG. 8 is a diagram of a U-map of frequency corresponding to the captured image illustrated in FIG. 7;

FIG. 9 is a diagram of a U-map of height corresponding to the captured image illustrated in FIG. 7;

FIG. 10 is a diagram of a real U-map corresponding to the captured image illustrated in FIG. 7;

FIG. 11 is a diagram of an example of a captured image;

FIG. 12 is a diagram of a real U-map corresponding to the captured image illustrated in FIG. 11;

FIG. 13 is a diagram of a layer U-map corresponding to the captured image illustrated in FIG. 11 and illustrating a layer of objects in a height range of 60 cm to 200 cm from a road surface;

FIG. 14 is a diagram of a layer U-map corresponding to the captured image illustrated in FIG. 11 and illustrating a layer of objects in a height range of 150 cm to 200 cm from the road surface;

FIG. 15 is a flowchart illustrating an operation of generating the layer U-maps;

FIG. 16 is a diagram of an example of a captured image;

FIG. 17 is a diagram of a real U-map corresponding to the captured image illustrated in FIG. 16;

FIG. 18 is a diagram of a layer U-map corresponding to the captured image illustrated in FIG. 16 and illustrating a layer of objects in a height range of 60 cm to 200 cm from the road surface;

FIG. 19 is a diagram of a layer U-map corresponding to the captured image illustrated in FIG. 16 and illustrating a layer of objects in a height range of 150 cm to 200 cm from the road surface;

FIG. 20 is a diagram of a layer U-map corresponding to the captured image illustrated in FIG. 16 and illustrating a layer of an object in a height range of 200 cm or higher from the road surface;

FIG. 21 is a flowchart of isolated region detection;

FIG. 22 is a schematic diagram illustrating a labeling method;

FIG. 23 is another schematic diagram illustrating the labeling method;

FIG. 24 is still another schematic diagram illustrating the labeling method;

FIG. 25 is a diagram of a layer U-map in which a distant road surface is detected to be lower than its actual height and in which the road surface and a vehicle are detected as one object;

FIG. 26 is a diagram of a real U-map of height corresponding to FIG. 25;

FIG. 27 is a flowchart of peripheral region removal;

FIG. 28 is a diagram illustrating a region removed by the peripheral region removal;

FIG. 29 is a flowchart of horizontal-direction separation;

FIG. 30 is a diagram illustrating arithmetic processing for evaluation values in the horizontal direction;

FIG. 31 is a diagram illustrating binarization of the evaluation values;

FIG. 32 is a diagram of a layer U-map resulting from smoothing;

FIG. 33 is a flowchart of vertical-direction separation;

FIG. 34 is a diagram illustrating an operation of calculating the evaluation values of respective lines;

FIG. 35 is a diagram illustrating an operation of detecting a real width of the object from the line having the largest evaluation value;

FIG. 36 is a diagram illustrating an arithmetic operation for a separation boundary of the object;

FIG. 37 is a diagram illustrating separation positions of the objects in the vertical direction on the real U-map;

FIG. 38 is a flowchart illustrating detection of an isolated region and classification of its object type;

FIG. 39 is a diagram of an example of a captured image;

FIG. 40 is a diagram of a layer U-map corresponding to the captured image illustrated in FIG. 39 and illustrating a layer of objects in a height range of 60 cm to 200 cm from the road surface;

FIG. 41 is a diagram of a layer U-map corresponding to the captured image illustrated in FIG. 39 and illustrating a layer of objects in a height range of 150 cm to 200 cm from the road surface;

FIG. 42 is a diagram of a layer U-map corresponding to the captured image illustrated in FIG. 39 and illustrating a layer of an object in a height range of 200 cm or higher from the road surface;

FIG. 43 is a diagram of a layer U-map obtained by superimposing the layers illustrated in FIGS. 40 to 42;

FIG. 44 is a diagram of a real U-map of frequency;

FIG. 45 is a diagram illustrating an operation of determining circumscribed rectangles of object line groups as object regions in a disparity image; and

FIG. 46 is a flowchart of detection of an object region (corresponding region) in the disparity image.

The accompanying drawings are intended to depict exemplary embodiments of the present invention and should not be interpreted to limit the scope thereof. Identical or similar reference numerals designate identical or similar components throughout the various drawings.

DETAILED DESCRIPTION OF THE PREFERRED EMBODIMENTS

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

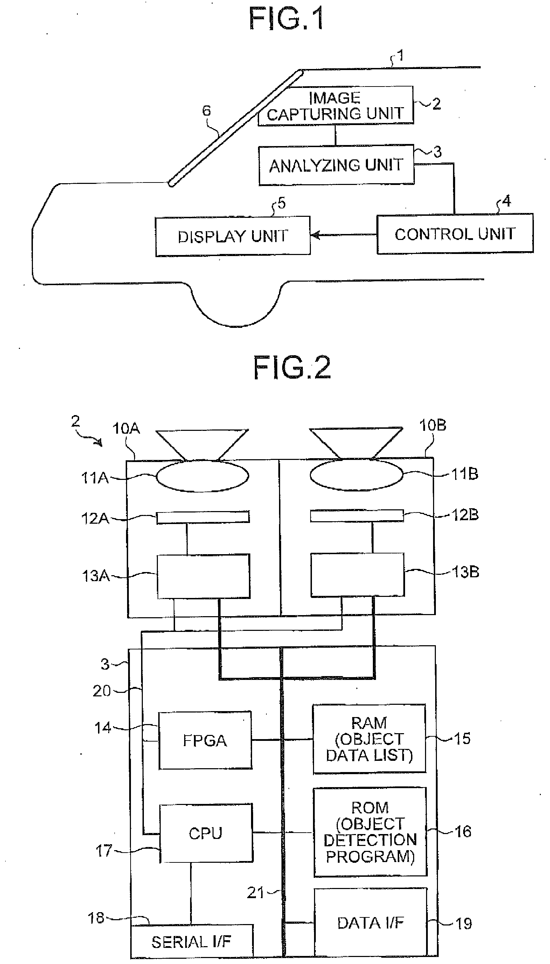

An embodiment of a mobile body control system according to the present invention is described below in detail with reference to the accompanying drawings. FIG. 1 is a diagram illustrating a schematic configuration of a mobile body control system according to the embodiment of the present invention. As illustrated in FIG. 1, the mobile body control system is mounted on a vehicle 1, such as a car, serving as an example of a mobile body. The mobile body control system includes an image capturing unit 2, an analyzing unit 3, a control unit 4, and a display unit 5.

The image capturing unit 2 is provided near a rearview mirror on a windshield 6 of the vehicle 1 to obtain an image ahead of the vehicle 1 in the direction of travel, for example. Various types of data, including image data obtained by an image-capturing operation by the image capturing unit 2, are supplied to the analyzing unit 3. Based on the various types of data supplied from the image capturing unit 2, the analyzing unit 3 analyzes a recognition target, such as a road surface on which the vehicle 1 is traveling and a preceding vehicle, a pedestrian, and an obstacle present ahead of the vehicle 1. Based on the results of the analysis performed by the analyzing unit 3, the control unit 4 gives a warning or the like to a driver of the vehicle 1 via the display unit 5. The control unit 4 also performs driving support, such as control on various onboard devices and steering control or braking control on the vehicle 1 based on the analysis results.

FIG. 2 is a schematic block diagram of the image capturing unit 2 and the analyzing unit 3. As illustrated in FIG. 2, the image capturing unit 2 has a stereo camera configuration including two image capture parts 10A and 10B, for example. The two image capture parts 10A and 10B have the same configuration. Specifically, the image capture parts 10A and 10B include image capturing lenses 11A and 11B, image sensors 12A and 12B, and controllers 13A and 13B, respectively. The image sensors 12A and 12B include light-receiving elements arranged two-dimensionally. The controllers 13A and 13B drive the image sensors 12A and 12B, respectively, to perform image-capturing.

The analyzing unit 3 includes a field-programmable gate array (FPGA) 14, a random access memory (RAM) 15, and a read only memory (ROM) 16. The analyzing unit 3 further includes a central processing unit (CPU) 17, a serial interface (serial I/F) 18, and a data I/F 19. The FPGA 14 to the data I/F 19 are connected to one another via a data bus line 21 of the analyzing unit 3. The image capturing unit 2 and the analyzing unit 3 are connected to each other via the data bus line 21 and a serial bus line 20.

The RAM 15 stores therein disparity image data and the like generated based on luminance image data supplied from the image capturing unit 2. The ROM 16 stores therein various computer programs, such as an operation system and an object detection program.

The FPGA 14 uses one of captured images obtained by the image capture parts 10A and 10B as a reference image and uses the other thereof as a comparison image. The FPGA 14 calculates the amount of positional deviation between a corresponding image portion on the reference image and a corresponding image portion on the comparison image, each corresponding to the same position in an image capturing region, as disparity values of the corresponding image portion (disparity image data).

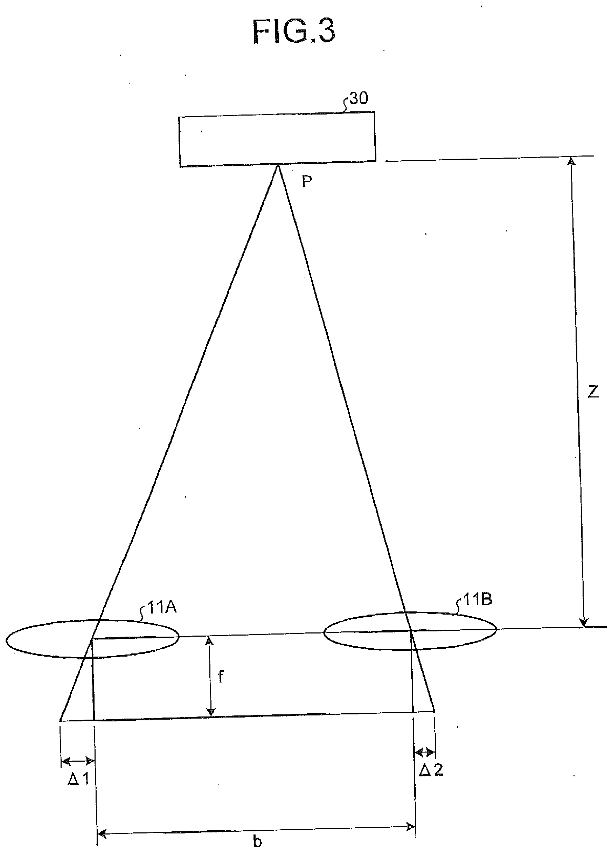

FIG. 3 illustrates a positional relation between a subject 30 and the image capturing lenses 11A and 11B of the respective image capture parts 10A and 10B in an X-Z plane. In FIG. 3, a distance b between the image capturing lenses 11A and 11B and a focal length f of the image capturing lenses 11A and 11B are fixed values. An amount $\Delta 1$ denotes a deviation amount in the X-coordinates of the image capturing lens 11A with respect to a fixation point P on the subject 30, whereas $\Delta 2$ denotes a deviation amount in the X-coordinates of the image capturing lens 11B with respect to the fixation point P on the subject 30. In this case, the FPGA 14 calculates a disparity value D corresponding to a difference in the X-coordinates between the image capturing lenses 11A and 11B with respect to the fixation point P on the subject 30 by Expression 1 below.

$$\text{Disparity Value D} = |\Delta 1 - \Delta 2| \quad (1)$$

The FPGA 14 of the analyzing unit 3 performs processing required to be performed in real time, such as gamma correction and distortion correction (paralleling the left and right captured images), on the luminance image data supplied from the image capturing unit 2. The FPGA 14 performs an arithmetic operation of Expression 1 using the luminance image data subjected to the processing required to be performed in real time. The FPGA 14 thus generates disparity image data (disparity value D) and writes the data to the RAM 15.

The CPU 17 operates based on the operation system stored in the ROM 16 and performs collective image capturing control on the image capture parts 10A and 10B. The CPU 17 loads the object detection program from the ROM 16 and performs various types of processing using the disparity image data written to the RAM 15. Specifically, the CPU 17 performs recognition of a recognition target, such as a road surface, a guardrail, a vehicle, and a person, calculation of the disparity, and calculation of the distance to the recognition target based on the object detection program with reference to controller area network (CAN) information including the vehicle speed, the rate of acceleration, the steering angle, and the yaw rate, acquired from sensors mounted on the vehicle 1 via the data I/F 19.

The disparity value D can be calculated by Expression 2 below where "Z" denotes a distance from the image capturing lenses 11A and 11B to the subject 30 illustrated in FIG. 3.

$$\text{Disparity Value D} = (b \times f)/Z \quad (2)$$

As indicated by Expression 2, the distance Z from the image capturing lenses 11A and 11B to the subject 30 can be calculated by Expression 3 below using the calculated disparity value D.

$$Z = (b \times f)/D \quad (3)$$

The CPU 17 calculates the distance Z to the recognition target using the disparity value D supplied from the image capturing unit 2.

The CPU 17 supplies the processing result to the control unit 4 illustrated in FIG. 1 via the serial I/F 1B or the data I/F 19. The control unit 4 performs braking control, vehicle speed control, and steering control, for example, based on the data of the processing result. The control unit 4 also displays a warning or the like on the display unit 5 based on the data of the processing result. The control unit 4 thus can perform driving support for the driver of the vehicle 1.

To detect a recognition target using three-dimensional information (spatial information) in the horizontal direction (width direction), the height direction, and the depth direction, it is important to efficiently use information on the respective dimensions (information on the width, the height, and the depth). The conventional technique detects a recognition target using a two-dimensional map (real U-disparity map) where the horizontal axis (X-axis) of the coordinates indicates a real distance and where the vertical axis (Y-axis) of the coordinates indicates a disparity value. The "real U-disparity map" is hereinafter simply referred to as a "real U-map".

The conventional technique, however, does not use information on the height of the recognition target from the ground parallel to the vertical axis (Y-axis) of camera coordinates in the real U-map. In a case where a plurality of recognition targets are adjacently positioned, the conventional technique frequently erroneously detects the recognition targets as one recognition target. Whether the erroneous detection is carried out depends on the manner of moving (manner of being captured) of the recognition targets. As a result, it is difficult for the conventional technique to accurately detect the recognition targets.

By contrast, the mobile body control system according to the embodiment generates a plurality of real U-maps in a layer structure (height range) based on the height of a recognition target from the road surface. Specifically, when performing voting of a disparity point in a disparity image on the real U-maps, the mobile body control system casts a vote on a real U-map of a height range set in advance, thereby creating real U-maps of respective height ranges. The U-maps of the respective heights are hereinafter referred to as "layer U-maps". The mobile body control system according to the embodiment performs grouping on two-dimensional planes in the layer U-maps of the respective height ranges and integrates or separates the grouping results.

Specifically, the mobile body control system casts a vote from a disparity point in a disparity image acquired from stereo images on a layer U-map of a predetermined height based on the real height from the road surface. The mobile body control system performs grouping on the two-dimensional planes in the respective layer U-maps and integrates or separates the grouping results. As a result, the mobile body control system can accurately detect a recognition target at high speed by efficiently using the height information. The mobile body control system according to the embodiment can accurately detect a recognition target, especially a person.

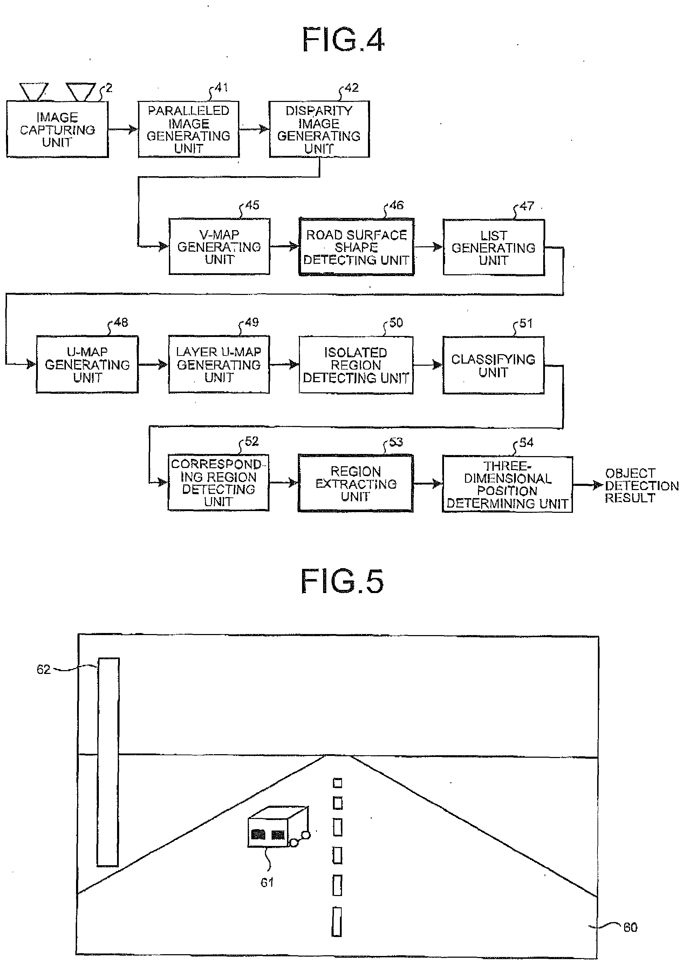

The following specifically describes an operation for recognizing a recognition target performed by the mobile body control system according to the embodiment. FIG. 4 is a functional block diagram illustrating various functions of the mobile body control system according to the embodiment. A paralleled image generating unit 41 and a disparity image generating unit 42 illustrated in FIG. 4 are provided as hardware by programmable logical blocks of the FPGA 14. While the paralleled image generating unit 41 and the disparity image generating unit 42 are provided as hardware in this example, they may be provided as software by the object detection program, which will be described later, for example.

A V-map generating unit 45 to a three-dimensional position determining unit 54 illustrated in FIG. 4 are provided as software by the CPU 17 executing the object detection program stored in the ROM 16. In other words, the CPU 17 executes the object detection program, thereby functioning as the V-map generating unit 45, a road surface shape detecting unit 46, a list generating unit 47, a U-map generating unit 48, a layer U-map generating unit 49, an isolated region detecting unit 50, a classifying unit 51, a corresponding region detecting unit 52, a region extracting unit 53, and the three-dimensional position determining unit 54.

While the V-map generating unit 45 to the three-dimensional position determining unit 54 are provided as software by the CPU 17 in this example, a part or all of them may be provided as hardware, such as an integrated circuit (IC). The object detection program may be recorded and provided in a computer-readable recording medium, such as a compact disc read only memory (CD-ROM), a flexible disk (FD), a compact disc recordable (CD-R), a DVD, a Bluray disc (registered trademark), and a semiconductor memory, as an installable or executable file. The DVD is an abbreviation of a "digital versatile disc". The object detection program may be provided by being installed via a network, such as the Internet- The object detection program may be embedded in advance and provided in the ROM in the device, for example.

In the mobile body control system having the configuration described above, the image capture parts 10A and 10B of the image capturing unit 2 serving as a stereo camera generate luminance image data. Specifically, in a case where the image capture parts 10A and 10B can perform color image capturing, the image capture parts 10A and 10B perform an arithmetic operation of Expression 4 below, thereby performing color luminance conversion for generating a luminance (Y) signal from RGB (red, green, and blue) signals. The image capture parts 10A and 10B supply the luminance image data generated by the color luminance conversion to the paralleled image generating unit 41 of the FPGA 14.

$$Y = 0.3R + 0.59G + 0.11B \quad (4)$$

The paralleled image generating unit 41 performs paralleling on the luminance image data supplied from the image capturing unit 2. Paralleling is processing for converting the luminance image data output from the image capture parts 10A and 10B into ideal paralleled stereo images obtained by two pinhole cameras attached in parallel. Specifically, the paralleled image generating unit 41 converts pixels of the luminance image data output from the image capture parts 10A and 10B using calculation results of the distortion amounts of the pixels calculated based on polynomials of $\Delta x = f(x,y)$ and $\Delta y = g(x,y)$. The polynomials are based on sextic polynomials on x (position in the horizontal direction in the image) and y (position in the vertical direction in the image). Parallel luminance images in which distortion in the optical system of the image capture parts 10A and 10B is corrected can be thus obtained.

The disparity image generating unit 42 generates a disparity image including disparity values of the respective pixels. The disparity image is an example of a depth map including distance information on the respective pixels. Specifically, the disparity image generating unit 42 performs the arithmetic operation of Expression 1 using the luminance image data of the image capture part 10A as reference image data and the luminance image data of the image capture part 10B as comparison image data. The disparity image generating unit 42 thus generates disparity image data indicating the disparities between the reference image data and the comparison image data. Specifically, the disparity image generating unit 42 defines a block composed of a plurality of pixels (e.g., $16 \times 1$ pixels) having a pixel of interest at the center thereof in a predetermined "row" in the reference image data. In the same "row" in the comparison image data, the disparity image generating unit 42 shifts a block having the same size as that of the defined block in the reference image data in the horizontal line direction (X-direction) pixel by pixel. The disparity image generating unit 42 calculates correlation values indicating correlations between the feature indicating characteristics of the pixel values of the block defined in the reference image data and the features indicating characteristics of the pixel values of the respective blocks in the reference image data.

Based on the calculated correlation values, the disparity image generating unit 42 performs matching for selecting a block of the comparison image data most correlating with the block of the reference image data out of the blocks in the comparison image data. Subsequently, the disparity image generating unit 42 calculates the amount of positional deviation between the pixel of interest in the block of the reference image data and a corresponding pixel in the block of the comparison image data selected by the matching as the disparity value D. The disparity image generating unit 42 performs the processing for calculating the disparity value D on the whole region or a specific region of the reference image data, thereby generating disparity image data. The disparity image data is a set of three-dimensional data including an x-coordinate and a y-coordinate, which are image coordinates, and the disparity value D. While the disparity image data is hereinafter referred to as an image, it is not necessarily provided as an image and simply needs to be a set of three-dimensional data.

The feature of the block used for the matching may be the values (luminance values) of the respective pixels in the block, for example. The correlation value may be the sum of the absolute values of difference between the values (luminance values) of the respective pixels in the block of the reference image data and the values (luminance values) of the respective pixels in the block of the comparison image data corresponding thereto, for example. In this case, a block having the smallest sum is detected as the most correlating block.

Examples of the matching performed by the disparity image generating unit 42 include sum of squared differences (SSD), zero-mean sum of squared differences (ZSSD), sum of absolute differences (SAD), and zero-mean sum of absolute differences (ZSAD) methods. If a disparity value at a sub-pixel level smaller than one pixel is required in the matching, an estimated value is used. Examples of a method for obtaining the estimated value include equiangular linear fitting and quadratic curve fitting. The estimated disparity value at a sub-pixel level, however, has an error. To address this, a method for reducing the estimation error, such as estimation error correction (EEC), may be used.

While the disparity image is provided as an example of a depth map in the present embodiment because the disparity value is assumed to be equivalent to the distance value, the embodiment is not limited thereto. The depth map may be generated by integrating distance information obtained by a millimeter wave radar or a laser radar with a disparity image generated by a stereo camera, for example.

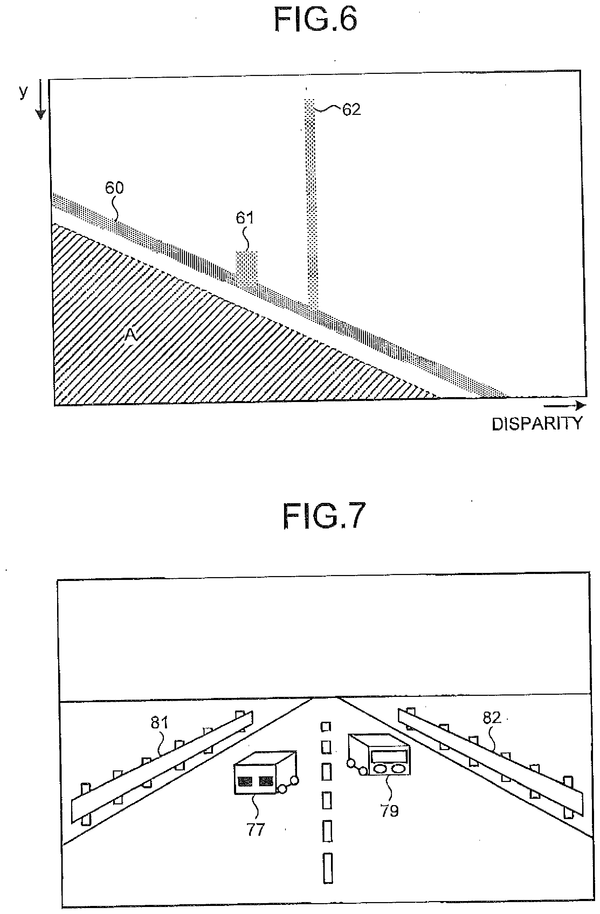

The following describes creation of a two-dimensional histogram where the X-axis indicates the disparity value D, the Y-axis indicates the y-coordinate value, and the Z-axis indicates frequency out of the set of data of the disparity image (the x-coordinate value, the y-coordinate value, and the disparity value D). The two-dimensional histogram is hereinafter referred to as a "V-disparity map (V-map)". Let us assume a case where a utility pole 62 is present on the left side of a vehicle 61 traveling on a flat road surface 60 extending at the center of the screen as illustrated in FIG. 5, for example. In this case, the V-map generating unit 45 adds a number (frequency) incremented by 1 to a pixel having the disparity value D and the y-coordinate value out of the pixels in the disparity image of the captured image obtained by the image capturing unit 2. The V-map generating unit 45 casts votes from the pixels on the two-dimensional histogram where the X-axis indicates the disparity value D, the Y-axis indicates the y-coordinate value, and the Z-axis indicates frequency. The V-map generating unit 45 thus creates a V-map in which votes from the vehicle 61 and the utility pole 62 are cast on the road surface 60 votes from which are cast as a line extending to the lower right as illustrated in FIG. 6. A pixel group corresponding to the road surface can be identified by identifying the linear pixel group on the V-map. In the V-map, no disparity value is detected at a portion lower than the road surface. As a result, no disparity value corresponding to a region A hatched by oblique lines in FIG. 6 is counted.

If disparity values are detected at the portion lower than the road surface because of noise or the like, the disparity values are not used in the subsequent object detection. To detect the height of an object, it is necessary to accurately detect the road surface. The embodiment may detect the road surface using a V-map (limited V-map) generated by using a virtual line K corresponding to the road surface detected in a state where the vehicle 1 is standing still and mapping only the pixels within a predetermined distance from the virtual line K.

The following describes an operation of the road surface shape detecting unit 46 that detects the shape of the road surface using the generated V-map. The road surface shape detecting unit 46 is an example of a reference detecting unit. The road surface shape detecting unit 46 detects a road surface, which is an example of a reference object serving as a reference for the height of each object. The road surface shape detecting unit 46 linearly approximates a position assumed to be the road surface on the V-map. If the road surface is flat, the road surface shape detecting unit 46 approximates the position by a line. If the road surface has an inclination changing midway thereof, the road surface shape detecting unit 46 divides the position on the V-map into a plurality of sections and performs linear approximation. With this configuration, the road surface shape detecting unit 46 can accurately perform linear approximation on the road surface the inclination of which changes midway thereof.

More specifically, the road surface shape detecting unit 46 detects road surface candidate points using the V-map. To detect the road surface candidate points, the road surface shape detecting unit 46 divides the horizontal axis into two and uses different methods to detect the candidate points in the respective regions. Specifically, the road surface shape detecting unit 46 detects the road surface candidate points in a nearer region having larger disparities using a first candidate point detection method. By contrast, the road surface shape detecting unit 46 detects the road surface candidate points in a farther region having smaller disparities using a second candidate point detection method.

The following describes the reason why different methods are used to detect the road surface candidate points in the nearer region having larger disparities and the farther region having smaller disparities. Because the area of the road surface in the nearer region is larger as illustrated in the captured image in FIG. 5, for example, the frequency at which votes from the disparity data on the road surface are cast on the V-map is larger. By contrast, because the area of the road surface in the farther region is smaller, the frequency of the coordinates indicating the road surface is relatively smaller. In other words, the frequency value of the point assumed to be the road surface on the V-map is smaller in the farther region and larger in the nearer region. In a case where the road surface candidate points are detected based on the same reference, the road surface candidate points in the nearer region can be detected, but those in the farther region are hard to detect. As a result, accuracy in detection of the road surface in the farther region is reduced.

To address the disadvantage described above, the road surface shape detecting unit 46 divides the V-map into two regions of the region having larger disparities and the region having smaller disparities. The road surface shape detecting unit 46 uses different methods and references to detect the road surface candidate points in the respective regions. This configuration can improve the accuracy in detecting the road surface in both the nearer region and the farther region.

The following describes an operation of the list generating unit 47. The list generating unit 47 calculates the height of the road surface and stores the height (as a table) in a storage unit, such as the RAM 15. Because the equation of the line representing the road surface has been obtained from the V-map, determination of a disparity d leads to determination of a y-coordinate y0 corresponding thereto. The coordinate y0 corresponds to the height of the road surface. The list generating unit 47 generates a road surface height list in which the coordinate y0 indicating the height of the road surface is associated with a required range of disparity. In a case where the disparity is d, and the y-coordinate is y', y' - y0 denotes the height from the road surface when the disparity is d. The list generating unit 47 calculates a height H from the road surface with coordinates (d,y') using an expression of "H = $(z \times (y' - y0))/f$". In the expression, "z" denotes a distance calculated from the disparity d (z = BF/(d - offset)), and "f" denotes a value obtained by converting the focal length of the image capturing unit 2 into the same unit as that of (y' - y0). BF denotes a value obtained by multiplying a base length B of the image capturing unit 2 by the focal length f, and offset denotes a disparity obtained when an object at infinity is captured.

The following describes an operation of the U-disparity map generating unit (U-map generating unit) 48. A U-map is a two-dimensional histogram where the horizontal axis indicates x in a disparity image, the vertical axis indicates the disparity d of the disparity image, and the Z-axis indicates frequency. The U-map generating unit 48 performs voting of a point (x,y,d) in a disparity image the height from the road surface of which falls within a predetermined height range of 20 cm to 3 m, for example, based on the values of (x,d). The U-map generating unit 48 performs voting of pixels in a predetermined range in the disparity image as the certain point (x,y,d) in the disparity image, thereby generating a U-map. Specifically, an upper one-sixth part of the disparity image corresponds to the sky, and no object required to be recognized is present in the region in most cases. The U-map generating unit 48, for example, performs voting of pixels in a lower five-sixths part of the disparity image on the ground side (region other than the upper one-sixth part thereof), thereby generating a U-map of frequency.

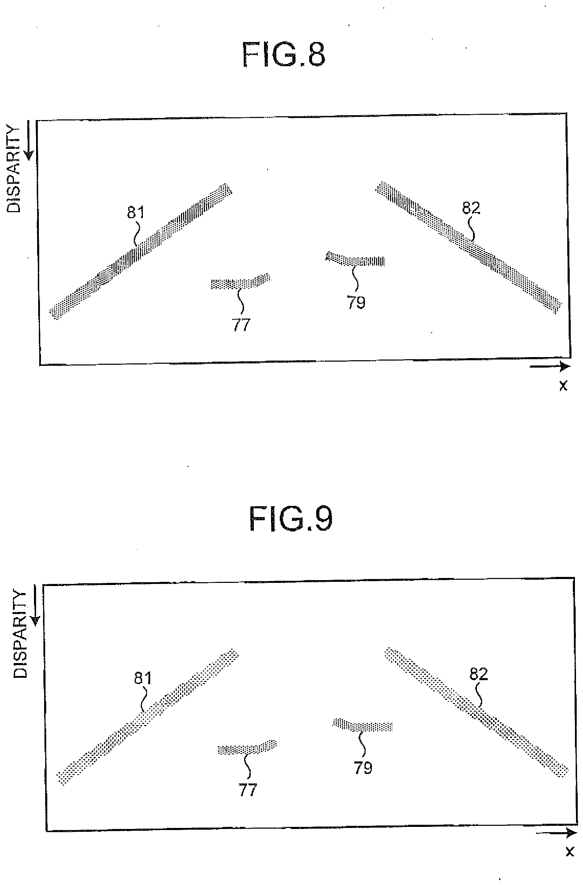

Specifically, in a luminance image illustrated in FIG. 7, guardrails 81 and 82 are present on the left and right sides, respectively, and a vehicle 77 and a vehicle 79 are traveling in two-way traffic on respective sides of a center line. The vehicle 77 and the vehicle 79 are traveling on the respective driving lanes alone. In this case, the U-map generating unit 48 generates a U-map of frequency illustrated in FIG. 8. In other words, the U-map generating unit 48 generates a U-map of frequency in which votes from the guardrails 81 and 82 are cast as lines extending from left and right, respectively, to the upper center. If the vehicles 77 and 79 are detected between the guardrails 81 and 82 with their horizontal segments and side surfaces in sight, the U-map generating unit 48 casts votes from the vehicles 77 and 79 on the U-map of frequency such that oblique lines indicating the side surfaces of the vehicles are connected to the respective horizontal segments.

The U-map generating unit 48 also generates a U-map of height besides the U-map of frequency. The U-map of height is obtained by setting the largest value of the height from the road surface out of the sets of (x,d) votes from which are cast on the U-map. In FIG. 9, the heights of the vehicles 77 and 79 are higher than those of the left guardrail 81 and the right guardrail 82. With the U-map of height, height information on an object can be used to detect the object.

The following describes an operation of the layer U-map generating unit 49. The layer U-map generating unit 49 is an example of a map generating unit. The layer U-map generating unit 49 generates a real U-map where the horizontal axis indicates an actual distance (real distance) from the U-map where the horizontal axis indicates the pixels of the image. The layer U-map generating unit 49 casts a vote from a point the vote from which is cast on the real U-map on a real U-map (of a layer) of a preset corresponding height depending on the height from the road surface, thereby generating layer U-maps serving as real U-maps of respective layers. The layer U-map is an example of a map.

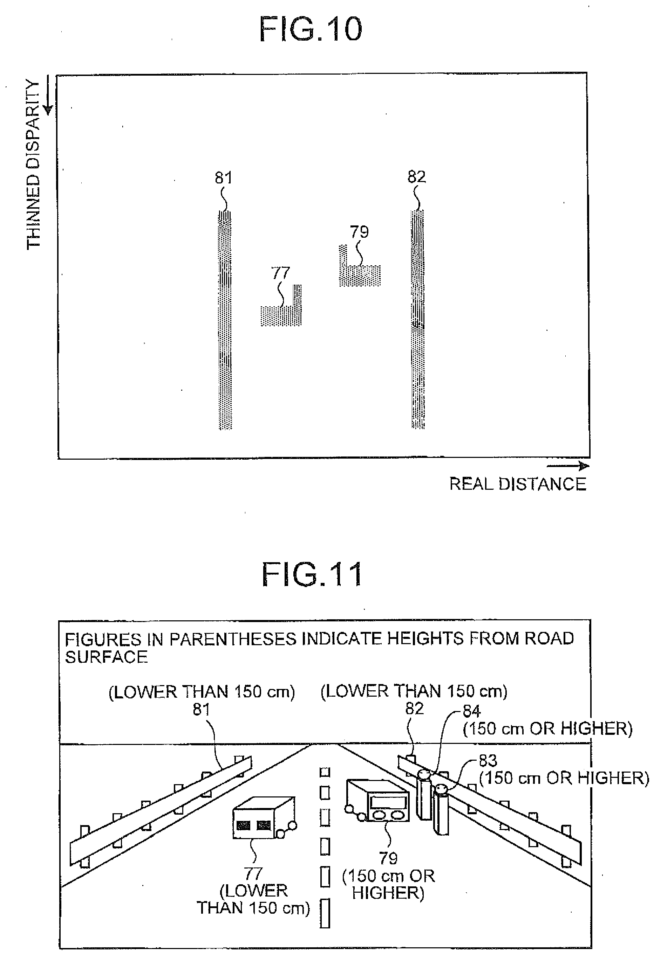

FIG. 10 illustrates an example of the real U-map. As illustrated in FIG. 10, the horizontal axis of the real U-map indicates a real distance. The vertical axis of the real U-map indicates a thinned disparity resulting from thinning at a thinning rate depending on the distance. Specifically, in the case of a long distance of 50 m or longer, for example, the layer U-map generating unit 49 uses disparities not subjected to thinning. In the case of a middle distance from 20 m to 50 m, for example, the layer U-map generating unit 49 uses disparities resulting from half-thinning. In the case of a short distance from 10 m to 20 m, for example, the layer U-map generating unit 49 uses disparities resulting from third-thinning. In the case of the shortest distance from 0 m to 10 m, for example, the layer U-map generating unit 49 uses disparities resulting from eighth-thinning.

No thinning is performed in the farther region because an object to be recognized is smaller, the amount of disparity information is smaller, and the resolution of the distance is lower. By contrast, greater thinning can be performed in the nearer region because an object is captured larger, the amount of disparity information is larger, and the resolution of the distance is higher. FIG. 10 is an example of the real U-map of frequency. As illustrated in the real U-map in FIG. 10, the guardrails 81 and 82 are indicated by vertical lines, and the shapes of the vehicles 77 and 79 are similar to those of the actual vehicles.

A two-dimensional histogram is created where the horizontal line indicates the real distance and where the vertical line indicates the disparity value. This operation can compress the height information to perform detection of an isolated region on a two-dimensional plane, thereby enabling high-speed processing.

The layer U-map generating unit 49 uses the real U-map of frequency to generate layer U-maps serving as real U-maps of respective height ranges. Specifically, in voting of the point (x,y,d) in the disparity image on the U-map having the horizontal axis x, the vertical axis y, and the disparity d, a height (h) of (x,d) from which a vote is cast on the real U-map from the road surface can be calculated by the road surface shape detection performed by the road surface shape detecting unit 46. Based on the height (h) of the point (x,d) a vote from which is cast on the layer U-map from the road surface, the layer U-map generating unit 49 casts the vote on a real U-map (of a layer) of a preset corresponding height range, thereby generating layer U-maps of respective layers.

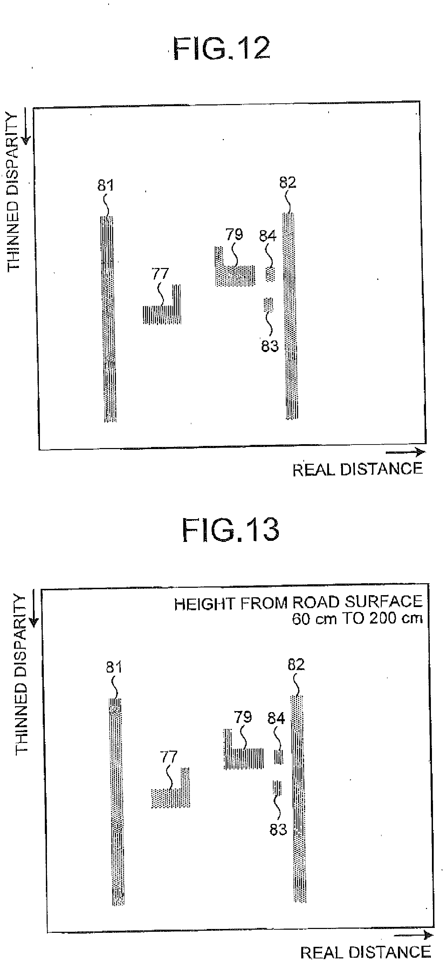

Specifically, as illustrated in FIG. 11, the vehicle 77 and the vehicle 79 are traveling in two-way traffic on the respective sides of the center line between the left guardrail 81 and the right guardrail 82, for example. In the captured image, two persons 83 and 84 are present along the right guardrail 82 between the vehicle 79 and the guardrail 82. In this case, the layer U-map generating unit 49 generates a real U-map of frequency where the horizontal line indicates the real distance and where the vertical line indicates the thinned disparity. As a result, the layer U-map generating unit 49 generates a real U-map illustrated in FIG. 12. In the real U-map in FIG. 12, the vehicles 77 and 79 are present between the guardrails 81 and 82 indicated by the vertical lines, and the two persons 83 and 84 are present along the right guardrail 82 between the vehicle 79 and the guardrail 82.

Subsequently, the layer U-map generating unit 49 detects the heights of the objects from the road surface calculated by the road surface shape detection performed by the road surface shape detecting unit 46. As a result, the layer U-map generating unit 49 can detect the heights of the objects from the road surface as follows: the heights of the guardrails 81 and 82 from the road surface is lower than 150 cm, the height of the vehicle 77 from the road surface is lower than 150 cm, the height of the vehicle 79 from the road surface is 150 cm or higher, and the heights of the persons 83 and 84 from the road surface are 150 cm or higher, for example.

Subsequently, the layer U-map generating unit 49 generates a layer U-map for objects in a height range of 60 cm to 200 cm from the road surface illustrated in FIG. 13. All of the guardrails 81 and 82, the vehicles 77 and 79, and the persons 83 and 84 are objects included in the layer of 60 cm to 200 cm. As a result, as illustrated in FIG. 13, the layer U-map generating unit 49 generates a layer U-map similar to the real U-map illustrated in FIG. 12. In the layer U-map illustrated FIG. 13, the vehicles 77 and 79 are present between the guardrails 81 and 82 indicated by the vertical lines and where the two persons 83 and 84 are present along the right guardrail 82 between the vehicle 79 and the guardrail 82.

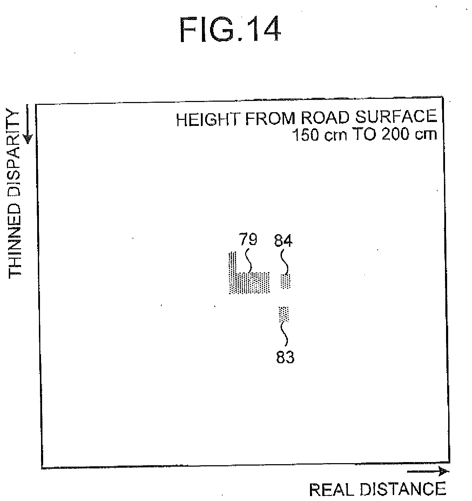

Similarly, the layer U-map generating unit 49 generates a layer U-map for objects in a height range of 150 cm to 200 cm from the road surface illustrated in FIG. 14. Because the guardrails 81 and 82 and the vehicle 77 have heights from the road surface of lower than 150 cm, the layer U-map generating unit 49 generates a layer U-map on which votes from the guardrails 81 and 82 and the vehicle 77 are not cast. In other words, as illustrated in FIG. 14, the layer U-map generating unit 49 generates a layer U-map on which votes are cast from the vehicle 79 and the two persons 83 and 84, which are objects having heights from the road surface of 150 cm to 200 cm.

Because the target heights overlap in the two layer U-maps described above, pixels indicating heights from the road surface of 150 cm to 200 cm are cast votes on both layer U-maps. While the target heights overlap in the two layer U-maps according to the present embodiment, the embodiment is not limited thereto. A first layer U-map may include 60 cm to lower than 150 cm, and a second layer U-map may include 150 cm to 200 cm, for example. Providing overlapping heights can omit redundant processing, thereby enabling high-speed processing.

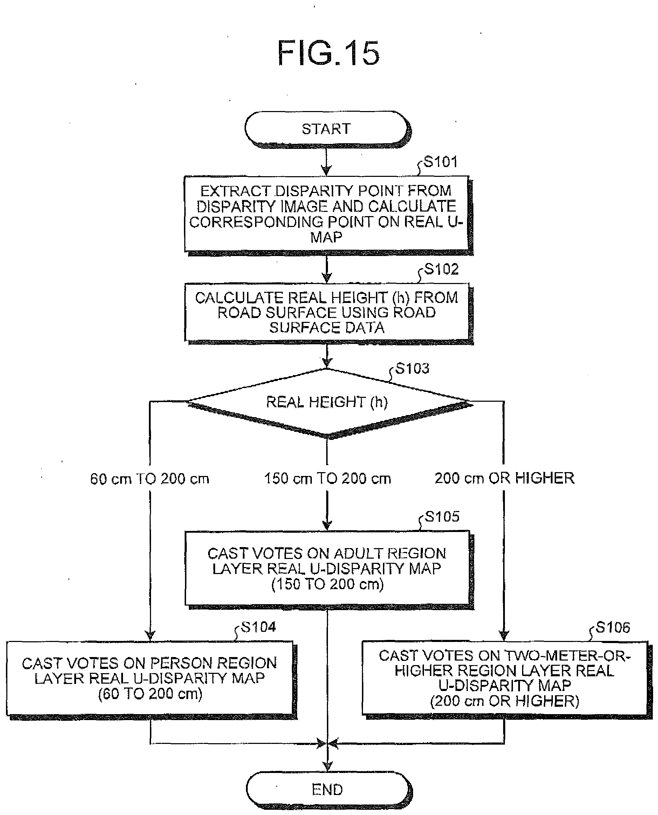

The flowchart in FIG. 15 illustrates a flow of an operation for generating the layer U-maps. The thresholds for handling the heights as layers on the layer U-maps are set in advance. In the example illustrated in FIG. 15, three layers are set in advance, including a person region layer having a height range of 60 cm to 200 cm, an adult region layer having a height range of 150 cm to 200 cm, and a two-meter-or-higher region layer having a height range of 200 cm or higher from the road surface.

At Step S101, the layer U-map generating unit 49 calculates a corresponding point (x,d) on a layer U-map from a point (x,y,d) in a disparity image. At Step S102, the layer U-map generating unit 49 calculates a real height (h) of the point (x,d) voting of which is to be performed from the road surface. At Step S103, the layer U-map generating unit 49 determines a layer to which the calculated real height h corresponds out of layers set in advance and performs voting thereon (Steps S104, S105, and S106).

In a case where the real height h is calculated to be 170 cm, for example, the layer U-map generating unit 49 performs voting on the layer U-map of 60 cm to 200 cm and the layer U-map of 150 cm to 200 cm. In this case, the layer U-map generating unit 49 performs no voting on the layer U-map of 20C cm or higher.

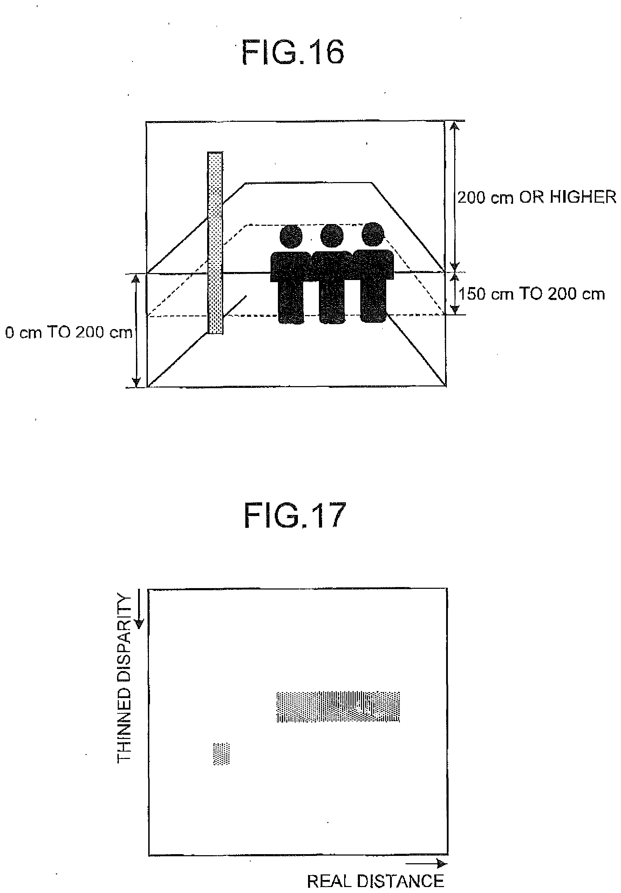

Specifically, the following layers are set in advance in the example illustrated in FIG. 16: a layer on which votes from an object having a real height from the road surface of 200 cm or higher are cast, a layer on which votes from an object having a real height from the road surface of 150 cm to 200 cm are cast, and a layer on which votes from an object having a real height from the road surface of 0 cm to 200 cm are cast. In other words, the layer U-maps are obtained by adding the height information to the real U-map. Even if a person and a thing are adjacently present, the objects can be thus accurately identified and detected.

In a case where a plurality of persons are adjacently present on an image, the persons are generally separated from one another in a high portion with respect to the road surface. In a low portion with respect to the road surface, such as a portion near the road surface or a case where the persons hold hands with one another, however, disparity regions are frequently connected to one another. In the layer U-map, a plurality of persons may be detected as one object as illustrated in FIG. 17. In other words, three persons illustrated in FIG. 16 may be detected as a rectangular object in a connected manner on the real U-map as illustrated in FIG. 17, for example.

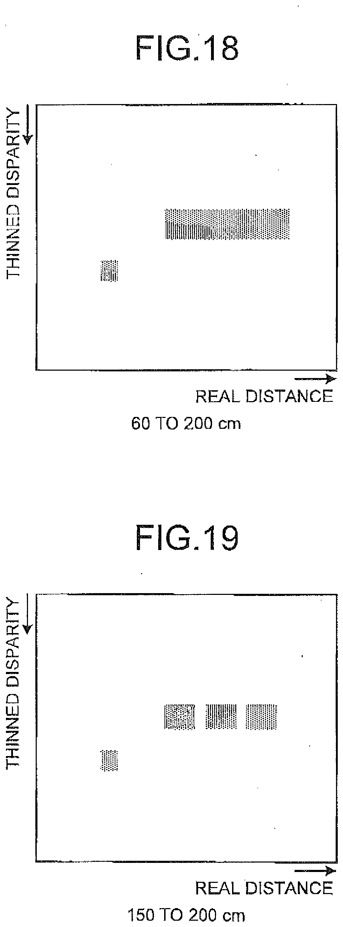

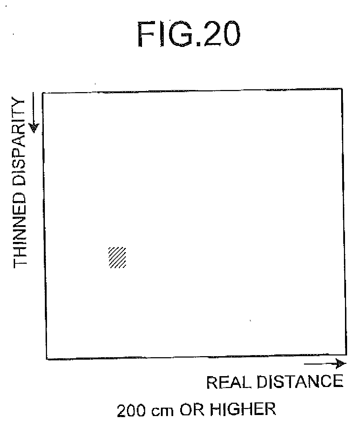

By contrast, in the layer U-maps, data is stored in a layer structure corresponding to the heights set in advance. With this structure, pieces of data of objects are connected on a layer U-map that is set to a height range of 60 cm to 200 cm as illustrated in FIG. 18 but are separated on a layer U-map set to a height range of 150 cm to 200 cm, which is another layer, as illustrated in FIG. 19. As a result, the objects can be each accurately detected. Such layer U-maps are used in various ways depending on the set thresholds of height. In a case where a threshold for heights of 200 cm or higher is set, for example, a utility pole or another pole having a height from the road surface of 200 cm or higher can be detected as illustrated in FIG. 20.

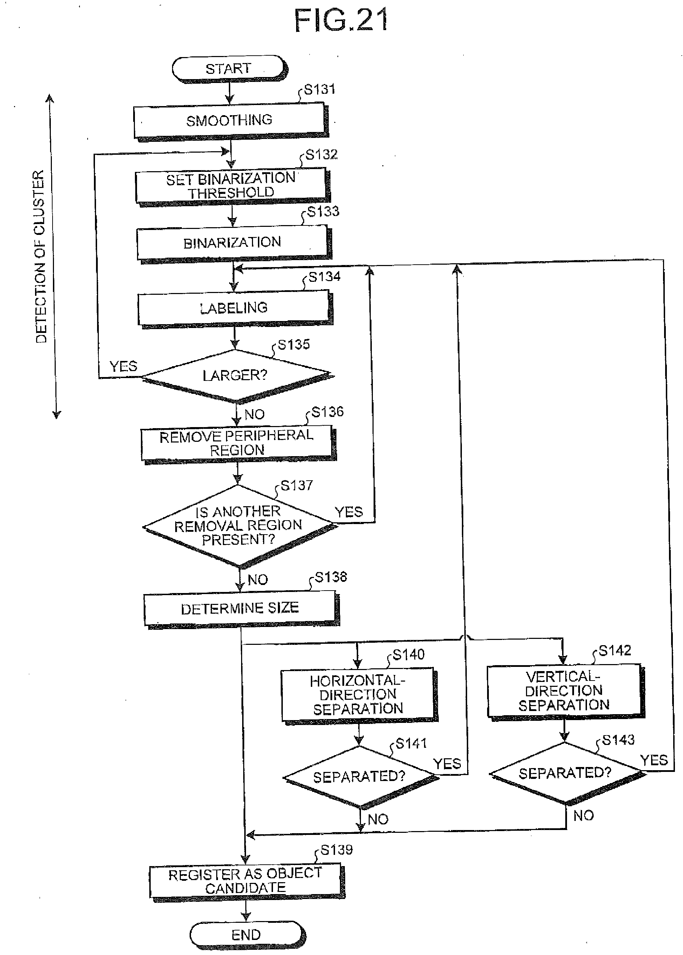

The following describes an operation of the isolated region detecting unit 50 that detects objects using the layer U-maps. The isolated region detecting unit 50 is an example of an aggregation detecting unit. The isolated region detecting unit 50 detects an isolated region (aggregated region) serving as a region of a cluster of disparity information of equal to or larger than a predetermined threshold from the layer U-maps. FIG. 21 is a flowchart of an operation of the isolated region detecting unit 50. At Step S131, the isolated region detecting unit 50 smooths the layer U-maps of frequency. Specifically, disparities are dispersed by a calculation error or the like, and calculation of the disparity is performed on not all the pixels. As a result, the layer U-maps include noise. To remove noise and facilitate separation of objects to be detected, the isolated region detecting unit 50 smooths the layer U-maps. Similarly to smoothing of an image, the isolated region detecting unit 50 applies a smoothing filter (e.g., a simple average of $3 \times 3$ pixels) to the frequency values of the layer U-maps, thereby reducing the frequency serving as noise. In the portion of the object, application of the smoothing filter can form a group having frequency higher than that of the circumference, thereby facilitating isolated region detection performed in the subsequent process.

At Step S132, the isolated region detecting unit 50 sets a threshold used to binarize the layer U-maps. The binarization is performed based on whether frequency data is present (threshold of zero). At Step S133, the isolated region detecting unit 50 performs binarization using a threshold of zero first. The objects votes from which are cast on the layer U-maps include an independent object and an object connected to another object depending on the height, the shape, separation from the road surface disparity, and other elements of the object. The isolated region detecting unit 50 binarizes the layer U-maps with a smaller threshold first and then performs binarization with a gradually increased threshold. With this processing, the isolated region detecting unit 50 can detect an independent object (isolated region) having an appropriate size first. Subsequently, the isolated region detecting unit 50 can separate connected objects by increasing the threshold and detect the connected objects as objects having independent sizes.

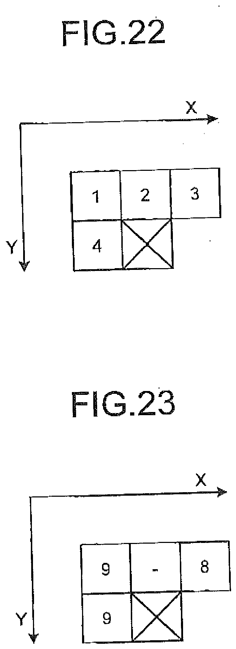

At Step S134, the isolated region detecting unit 50 performs labeling on coordinates having a value, thereby detecting an isolated region. Specifically, the isolated region detecting unit 50 performs labeling on coordinates having a value of black after the binarization (coordinates having a frequency value larger than the binarization threshold) based on the connectivity. The isolated region detecting unit 50 detects a region to which the same label is allocated as one object. The labeling method is as follows. Let us assume a case where the coordinates indicated by an "x" in FIG. 22 is black and labeling target coordinates. In this case, if a label is allocated to the coordinates of the positions of upper left, above, upper right, and left of the coordinates indicated by the "x", that is, the coordinates of the positions of "1", "2", "3", and "4", the isolated region detecting unit 50 allocates the same label to the coordinates indicated by the "x".

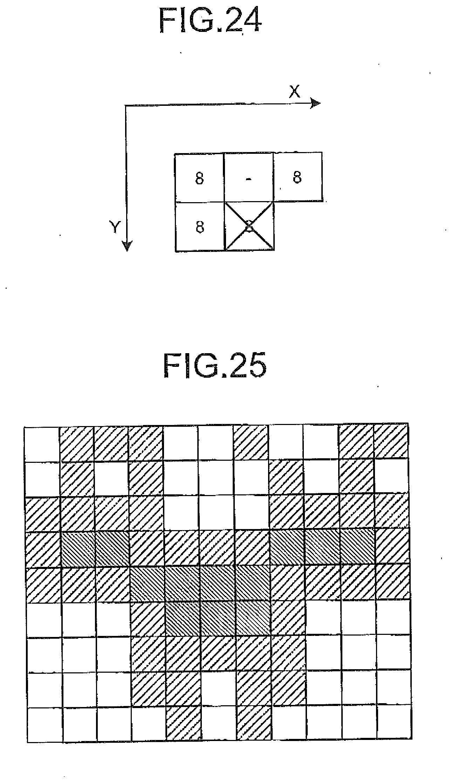

If a plurality of labels are allocated to the circumference of the coordinates indicated by the "x" as illustrated in FIG. 23, the isolated region detecting unit 50 allocates a label of the smallest value to the coordinates indicated by the "x" as illustrated in FIG. 24. Furthermore, as illustrated in FIG. 24, the isolated region detecting unit 50 replaces labels of the coordinates to which the labels are allocated out of the coordinates of the circumference of the coordinates indicated by the "x" with the label of the smallest value. In the example illustrated in FIGS. 23 and 24, the isolated region detecting unit 50 allocates a label "8" to the coordinates indicated by the "x". Furthermore, the isolated region detecting unit 50 replaces labels of the coordinates to which labels "9" and "8" are allocated, that is, labels of the coordinates of upper left, upper right, and left of the coordinates indicated by the "x" with the label "8".

The width of the object detected by the labeling (width of the object with the same label allocated) can be considered to be a width W closer to that of the actual object. The isolated region detecting unit 50 considers an object the width W of which falls within a predetermined range to be an object candidate region.

At Step S135, the isolated region detecting unit 50 determines the sizes of a plurality of detected isolated regions. A detection target varies from a pedestrian to a large car, and determination of the sizes is performed to determine whether the width of the isolated region falls within a range of the size of the detection target. If the width of the isolated region is larger than the size of the detection target (Yes at Step S135), the isolated region detecting unit 50 returns the process to Step S132. The isolated region detecting unit 50 increments the threshold for binarization by one and binarizes the isolated region having a width larger than the size of the detection target again. The isolated region detecting unit 50 performs labeling on the isolated region subjected to binarization again, thereby detecting a smaller isolated region. The isolated region detecting unit 50 then determines whether the width of the isolated region is larger than the size of the detection target. As described above, the isolated region detecting unit 50 repeatedly performs the processing from setting of the threshold to labeling, thereby detecting an isolated region having a predetermined size.

If an isolated region having the predetermined size is detected (No at Step S135), the isolated region detecting unit 50 performs peripheral region removal at Step S136. In the case of an object present in the distance, poor accuracy in detecting the road surface may cause votes from the disparities of the road surface to be cast on the layer U-maps. As a result, the disparities of the object and the road surface may be detected as a cluster. In this case, the isolated region detecting unit 50 performs the peripheral region removal for removing a region the height of which is closer to that of the road surface from the left and right sides and the neighborhood of the region (removal region) in which the disparities of the object and the road surface are detected as a cluster.

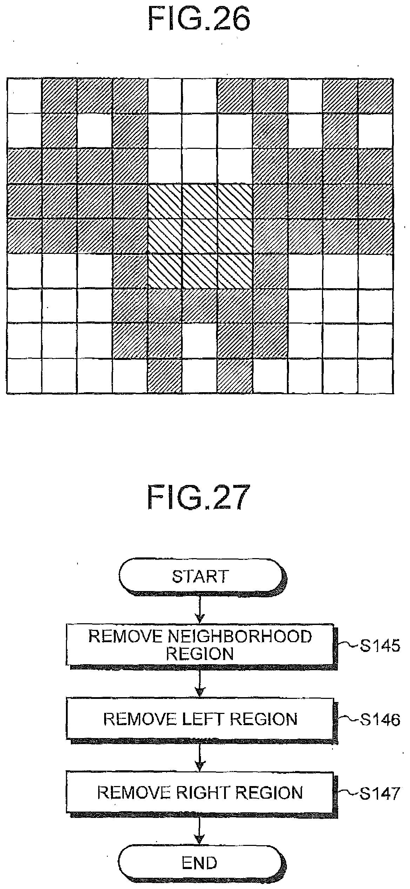

The following specifically describes the peripheral region removal. FIG. 25 is a diagram of a layer U-map in which a distant road surface is detected to be lower than its actual height and in which the road surface and a vehicle are detected as one object. In FIG. 25, a region hatched by oblique lines extending to the lower right indicates a region having high frequency, whereas a region hatched by oblique lines extending to the lower left indicates a region having low frequency. FIG. 26 illustrates a real U-map of height corresponding to the layer U-map in FIG. 25. The real U-map of height has information on the highest heights of the respective pixels. In FIG. 26, a region hatched by oblique lines extending to the lower right indicates a region having a high height, whereas a region hatched by oblique lines extending to the lower left indicates a region having a low height. As is clear from comparison between FIG. 25 and FIG. 26, the region having high frequency in the layer U-map is not identical with the region having a high height in the real U-map of height. The region having low frequency in the layer U-map is not identical with the region having a low height in the real U-map of height.

In this case, the isolated region detecting unit 50 detects a boundary between the object and the road surface to remove the peripheral region using the real U-map of height instead of the layer U-map. While in the layer U-maps the number of pieces of the height information is only the number of division (number of layers) of the height range, the real U-map of height has the height information in higher resolution. As a result, the real U-map of height is suitably used for removal of the peripheral region. In the flowchart illustrated in FIG. 27, for example, the isolated region detecting unit 50 performs removal of the peripheral region in the order of removal of the neighborhood region (Step S145), removal of the left region (Step S146), and removal of the right region (Step S147) .

Whether to remove the neighborhood region is determined at Step S145 as follows. The isolated region detecting unit 50 sets the following threshold of height. If a condition 1, a condition 2, or a condition 3 continues to be satisfied from the lowest end (bottom line) of the isolated region, the isolated region detecting unit 50 changes frequency of the corresponding line and removes the line. When setting the threshold of height, the isolated region detecting unit 50 sets the height threshold depending on the highest height of the region (removal region) in which the disparities of the object and the road surface are detected as a cluster. If the highest height is 120 cm or higher, for example, the isolated region detecting unit 50 sets the height threshold to 60 cm. If the highest height is lower than 120 cm, the isolated region detecting unit 50 sets the height threshold to 40 cm.

The condition 1 is that "the number of points having heights in the line is equal to or more than a predetermined number (e.g., 5), and no point having a height of equal to or higher than the height threshold is present". The condition 2 is that "the number of points having heights of equal to or higher than the height threshold in the line is less than the number of points having heights of lower than the height threshold, and the number of points having heights of equal to or higher than the height threshold is less than 2". The condition 3 is that "the number of points having heights of equal to or higher than the height threshold is less than 10% of the number of points having heights in the entire line". If the condition 1, the condition 2, or the condition 3 continues to be satisfied from the lowest end (bottom line) of the isolated region, the isolated region detecting unit 50 changes frequency of the corresponding line to remove the line.

Whether to remove the left and the right regions is determined at Steps S146 and S147, respectively, as follows. The isolated region detecting unit 50 sets the following threshold of height. If a condition 4, a condition 5, or a condition 6 continues to be satisfied from the column on the left end or the right end of the isolated region, the isolated region detecting unit 50 changes frequency of the corresponding column and removes the column. The isolated region detecting unit 50 sets the height threshold depending on the highest height of the region (removal region) in which the disparities of the object and the road surface are detected as a cluster. If the highest height is 120 cm or higher, for example, the isolated region detecting unit 50 sets the height threshold to 60 cm. If the highest height is lower than 120 cm, the isolated region detecting unit 50 sets the height threshold to 40 cm.

The condition 4 is that "the number of points having heights in the column is equal to or more than a predetermined number (e.g., 5), and no point having a height of equal to or higher than the height threshold is present". The condition 5 is that "the number of points having heights of equal to or higher than the height threshold in the column is less than the number of points having heights of lower than the height threshold, and the number of points having heights of equal to or higher than the height threshold is less than 2". The condition 6 is that "the number of points having heights of equal to or higher than the height threshold is less than 10% of the number of points having heights in the entire column". If the condition 4, the condition 5, or the condition 6 continues to be satisfied from the column on the left end or the right end of the isolated region, the isolated region detecting unit 50 changes frequency of the corresponding column to remove the column.

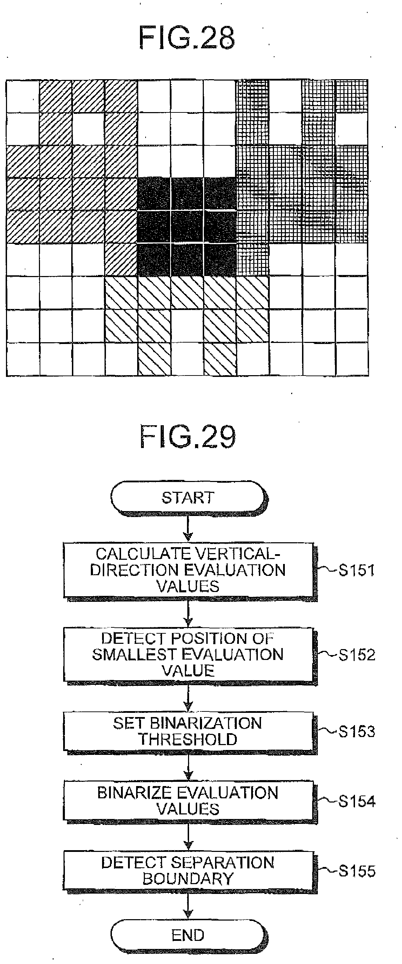

In FIG. 28, a black region positioned at the center indicates an isolated region having a higher height. Isolated regions hatched by oblique lines extending to the lower right, oblique lines extending to the lower left, and a mesh pattern indicate isolated regions having lower heights. The isolated region hatched by the oblique lines extending to the lower right is removed based on the height threshold set by the isolated region detecting unit 50 and on the condition 1, the condition 2, or the condition 3. The isolated regions hatched by the oblique lines extending to the lower left and the mesh pattern are removed based on the height threshold set by the isolated region detecting unit 50 and on the condition 4, the condition 5, or the condition 6. As a result, only the black isolated region positioned at the center in FIG. 28 can be extracted.

At Step S137 in the flowchart in FIG. 21, the isolated region detecting unit 50 determines whether another removal region is present. If another removal region is present (Yes at Step S137), the isolated region detecting unit 50 returns the process to Step S134. The isolated region detecting unit 50 performs labeling to set an isolated region again.

If it is determined that no other removal region is present at Step S137 (No at Step S137), the isolated region detecting unit 50 performs processing at Step S138 to determine the size (the width, the height, and the distance) of the isolated region resulting from the peripheral region removal.

Let us assume a case where objects, such as a car and a motorcycle, a car and a pedestrian, and cars, are adjacent to each other side by side, for example. In this case, isolated regions of the respective objects may be detected as an isolated region of one object because of smoothing of the layer U-maps. Alternatively, disparities of different objects may be connected in disparity interpolation for supplementing the number of pixel points in a disparity image. In this case, the isolated region detecting unit 50 performs horizontal-direction separation, which will be described later, to separate one isolated region in which a plurality of objects overlap into a plurality of isolated regions of the respective objects.

Let us also assume a case where a plurality of preceding vehicles traveling on the adjacent driving lane are present in the distance. If dispersion of the disparities obtained from stereo images is large, the disparities of the respective objects may vertically extend and be connected to one another on the layer U-maps. As a result, isolated regions of the connected objects may be detected as an isolated region of one object. In this case, the isolated region detecting unit 50 performs vertical-direction separation, which will be described later, to separate the isolated region detected as one object into an isolated region of a preceding vehicle traveling on the near side and an isolated region of a vehicle traveling ahead of the preceding vehicle.

At Step S138, the isolated region detecting unit 50 determines the size (the width, the height, and the distance) of the isolated region resulting from the peripheral region removal, thereby determining whether to perform horizontal-direction separation or vertical-direction separation. If the isolated region detecting unit 50 determines to perform neither of the separation, the isolated region detecting unit 50 performs processing at Step S139. The isolated region detecting unit 50 temporarily registers the isolated region resulting from the peripheral region removal in the storage unit, such as the RAM 15, as an object candidate.

By contrast, in a case where an object having a width of 50 cm is adjacent to a car having a width of 2 m, for example, an isolated region detected from the layer U-maps is determined to be an object having a width of larger than 2.5 m in the size determination at Step S138. In this case, the isolated region detecting unit 50 performs processing at Step S140 to carry out horizontal-direction separation and processing at Step S142 to carry out vertical-direction separation.

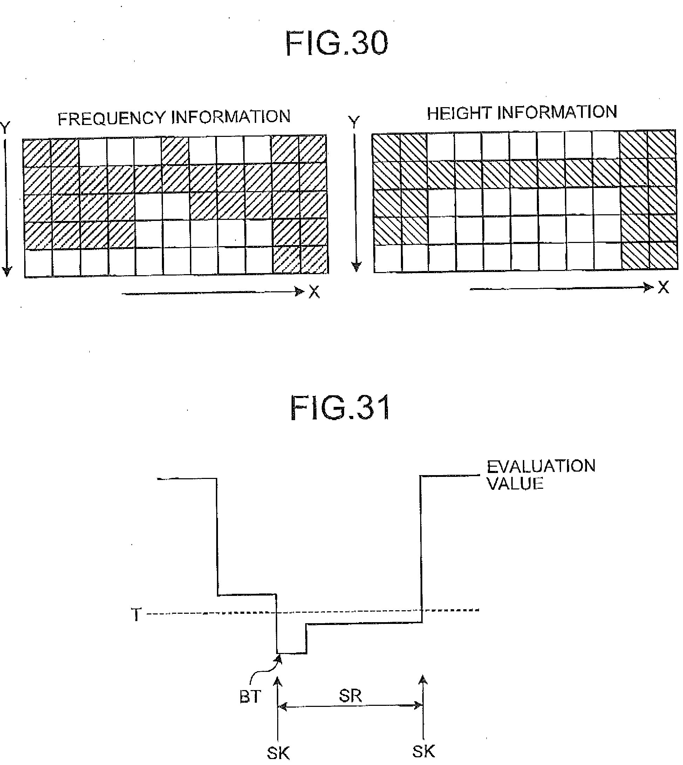

FIG. 29 is a flowchart of horizontal-direction separation performed by the isolated region detecting unit 50. At Step S151, the isolated region detecting unit 50 accumulates frequency information and height information on X-coordinates as illustrated in FIG. 30 and integrates the accumulated values of the respective X-coordinates in the vertical direction (Y-direction), thereby calculating evaluation values at respective points along the horizontal direction.

FIG. 31 illustrates an example of a waveform of the evaluation values at respective points along the horizontal direction. In the evaluation values, a bottom BT indicates the smallest value of the evaluation values (smallest evaluation value). At Step S152, the isolated region detecting unit 50 detects the position of the smallest evaluation value. At Step S153, the isolated region detecting unit 50 multiplies the average of the evaluation values by a predetermined coefficient (e.g., 0.5), thereby calculating a binarization threshold T for the evaluation values. The isolated region detecting unit 50 sets the binarization threshold T for the evaluation values as indicated by the dotted line in FIG. 31. At Step S154, the isolated region detecting unit 50 binarizes the evaluation values based on the binarization threshold.

The reasons to use the evaluation values are as follows. First, the frequency value of a connected portion can be used as a value relatively smaller than the frequency value of an object. Second, the real U-map of height has little pieces of data having heights because the height of the connected portion is different from that of the object portion. Third, if isolated regions are connected by an effect of disparity interpolation, dispersion of the disparities in the real U-map of height is small.

At Step S155, the isolated region detecting unit 50 defines a region including the smallest evaluation value and evaluation values smaller than the binarization threshold T as a separation region SR and defines both ends of the separation region SR as separation boundaries SK as illustrated in FIG. 31. The isolated region detecting unit 50 changes the frequency values inside of the separation boundaries SK, thereby separating isolated regions corresponding to the respective objects from each other in the horizontal direction.

At Step S141 in the flowchart in FIG. 21, the isolated region detecting unit 50 registers an object incapable of being separated by the horizontal-direction separation (No at Step S141) in the storage unit, such as the RAM 15, as an object candidate. If the horizontal-direction separation has been able to be carried out (Yes at Step S141), further separation may be possible. In this case, the isolated region detecting unit 50 returns the process to Step S134 to attempt further horizontal-direction separation.

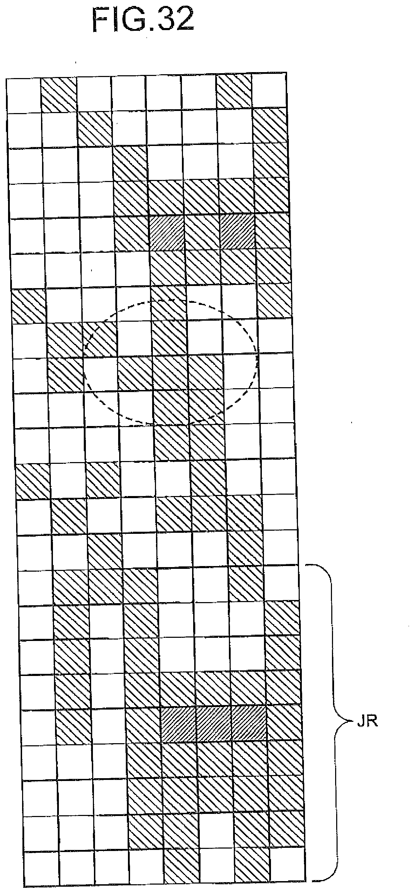

FIG. 32 illustrates a layer U-map resulting from smoothing. In the layer U-map illustrated in FIG. 32, isolated regions hatched by oblique lines extending to the lower left indicate isolated regions having high frequency, whereas isolated regions hatched by oblique lines extending to the lower right indicate isolated regions having low frequency. An isolated region having high frequency on the lower side of FIG. 32 (isolated region hatched by oblique lines extending to the lower left) indicates an isolated region corresponding to a first preceding vehicle traveling just ahead of the vehicle 1. An isolated region having high frequency on the upper (farther) side of FIG. 32 (isolated region hatched by oblique lines extending to the lower left) indicates an isolated region corresponding to a second preceding vehicle traveling ahead of the first preceding vehicle traveling just ahead of the vehicle 1.

In the layer U-map illustrated in FIG. 32, the disparities concentrate on the left and right ends of the preceding vehicles, and dispersion of the disparities is large. As a result, the disparities extend on both sides of the isolated regions having high frequency in a manner curving to the left. Because extension of the disparities is large, extended disparities of the first preceding vehicle on the near side are connected to extended disparities of the second preceding vehicle on the far side as indicated in a dotted ellipse in FIG. 32. As a result, the two preceding vehicles are detected as one isolated region. In this case, the width of the detected isolated region is larger than those of the actual preceding vehicles. To address this, the isolated region detecting unit 50 sets a region for calculating the real widths of the preceding vehicles. The isolated region detecting unit 50 sets a predetermined distance range Zr depending on the magnitude of a nearest distance Zmin of the isolated region, which will be described later, as the region for calculating the real widths of the preceding vehicles. The isolated region detecting unit 50 searches for the real width of the first preceding vehicle on the near side in a region of a disparity range corresponding to the distance range. The region of the distance range illustrated in FIG. 32 corresponds to a real width calculation region JR. The value of Zr can be set based on the magnitude of dispersion of the disparities obtained from the captured image obtained by the image capturing unit 2.

Specifically, the isolated region detecting unit 50 sets the distance range Zr of the real width calculation region as follows. If "Zmin < 50 m" is satisfied, for example, the isolated region detecting unit 50 sets Zr to 20 m. If "50 m $\leq$ Zmin < 100 m" is satisfied, for example, the isolated region detecting unit 50 sets Zr to 25 m. If "Zmin > 100 m" is satisfied, for example, the isolated region detecting unit 50 sets Zr to 30 m. The isolated region detecting unit 50 thus separates a plurality of objects connected in the horizontal direction in an isolated region from one another by the horizontal-direction separation described above.

The following describes the vertical-direction separation performed at Step S142. Let us assume a case where objects are aligned in the vertical direction on the layer U-map as illustrated in FIG. 32. If two or more cars traveling in line are detected as one isolated region, the disparity range of the isolated region corresponds to a range obtained by adding the ranges of disparities of the two or more cars and the distance between the cars. In a long distance of 20 m or longer, for example, the isolated region has a broad range of disparities (distances) other than guardrails or walls. As a result, it is difficult to separate the isolated region in the column direction. To address this, the isolated region detecting unit 50 performs vertical-direction separation on an isolated region having a large disparity (distance) range depending on the distance. Because guardrails, walls of buildings, or the like have broad disparity ranges but have small widths. The isolated region detecting unit 50 performs no vertical-direction separation on an isolated region having a small width.

Specifically, the isolated region detecting unit 50 performs the vertical-direction separation when one of a condition 7 and a condition 8 is satisfied where "Zmin" indicates the nearest distance of the isolated region, "Zmax" indicates the farthest distance, and "W" indicates the width. The condition 7 is that "when W > 1500 and Zmin > 100 m, Zmax - Zmin > 50 m". The condition 8 is that "when W > 1500 and 100 m $\geq$ Zmin > 20 m, Zmax - Zmin > 40 m".

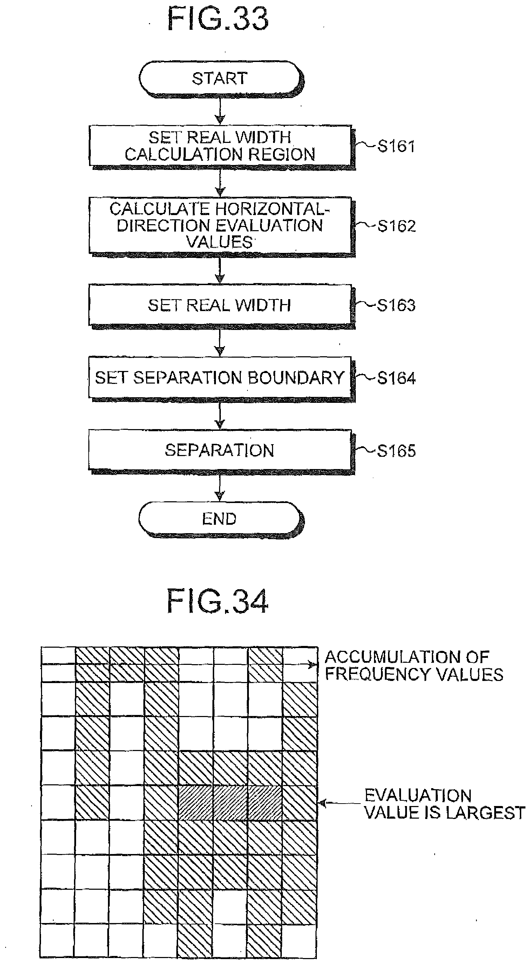

The flowchart in FIG. 33 illustrates a flow of the vertical-direction separation. As described above, FIG. 32 illustrates a layer U-map in which two preceding vehicles traveling on the left-adjacent driving lane are detected as one isolated region. In this example, the region having high frequency on the lower (nearer) side of FIG. 32 hatched by oblique lines indicates the first preceding vehicle traveling just ahead of the vehicle 1. The region having high frequency on the upper (farther) side of FIG. 32 hatched by oblique lines indicates the second preceding vehicle traveling ahead of the first preceding vehicle. The disparities concentrate on the left and right ends of the preceding vehicles, and dispersion of the disparities is large. As a result, the disparities extend on both sides of the regions having high frequency in a manner curving to the left. Because extension of the disparities is large, extended disparities of the first preceding vehicle on the near side are connected to extended disparities of the second preceding vehicle on the far side. As a result, the two preceding vehicles are detected as one isolated region.

Because the widths of the two preceding vehicles are detected in an overlapping manner, the width of the isolated region is detected to be larger than that of one of the actual preceding vehicles. To address this, the isolated region detecting unit 50 sets a region for calculating the real width at Step S161 in the flowchart in FIG. 33.

Specifically, the isolated region detecting unit 50 sets the predetermined distance range Zr based on Zmin of the isolated region depending on the magnitude of Zmin as follows.

If Zmin < 50 m, Zr is set to 20 m.

If 50 m $\leq$ Zmin < 100 m, Zr is set to 25 m.

If Zmin > 100 m, Zr is set to 30 m.

The isolated region detecting unit 50 detects the real width of the first preceding vehicle on the near side in a region within a disparity range corresponding to the distance range set in this manner. The region included in the curly bracket in FIG. 32 corresponds to the real width calculation region JR. The isolated region detecting unit 50 sets the value of the predetermined distance range Zr based on the magnitude of dispersion of the disparities obtained from the image capturing unit 2.

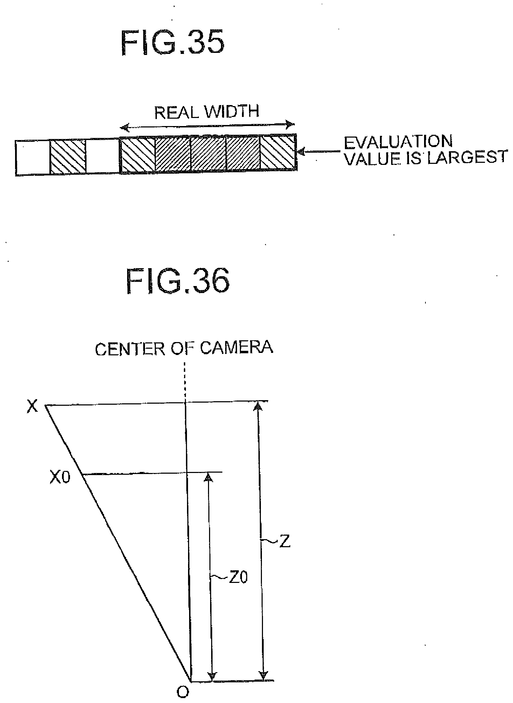

At Step S162, the isolated region detecting unit 50 calculates horizontal-direction evaluation values in the real width calculation region JR. As illustrated in FIG. 34, the isolated region detecting unit 50 determines frequency values accumulated for respective lines in the real width calculation region JR to be the evaluation values of the respective lines. As illustrated in FIG. 35, the isolated region detecting unit 50 determines the line having the largest evaluation value to be a real width detection position.

At Step S163, the isolated region detecting unit 50 detects a real width region in which the frequency values are continuously present at the real width detection position and having the largest length (width) as illustrated in FIG. 35. The isolated region detecting unit 50 determines the detected largest length to be the real width. In the example illustrated in FIG. 35, the real width is five.

At Step S164, the isolated region detecting unit 50 determines the outside of the boundary of the real width to be a separation boundary. Based on the separation boundary, the isolated region detecting unit 50 sequentially calculates and sets the positions of the separation boundaries in the respective disparities of the isolated region. As illustrated in FIG. 36, O denotes the center of the lens of the camera in the image capturing unit 2, a direction to which the camera faces corresponds to a camera central axis (vertical axis at the center of the layer U-map), and a direction perpendicular to the camera central axis corresponds to the horizontal axis. Let us assume a case where the position of the separation boundary of the real width region is at a distance Z0 and a horizontal position X0, for example. In this case, a position X of the separation boundary at a distance Z is expressed by "X = X0 $\times$ (Z/Z0)".

Let us assume a case where BF denotes a value obtained by multiplying the base length B of the image capturing unit 2 by the focal length F, d0 denotes a disparity corresponding to Z0, d denotes a disparity corresponding to Z, and offset denotes a disparity at infinity. In this case, "Z = BF/(d - offset)" and "Z0 = BF/(d0 - offset)" are satisfied, and the expression "X = X0 $\times$ (Z/Z0)" can be represented by "X = X0 $\times$ ((d0 - offset) / (d - offset))".

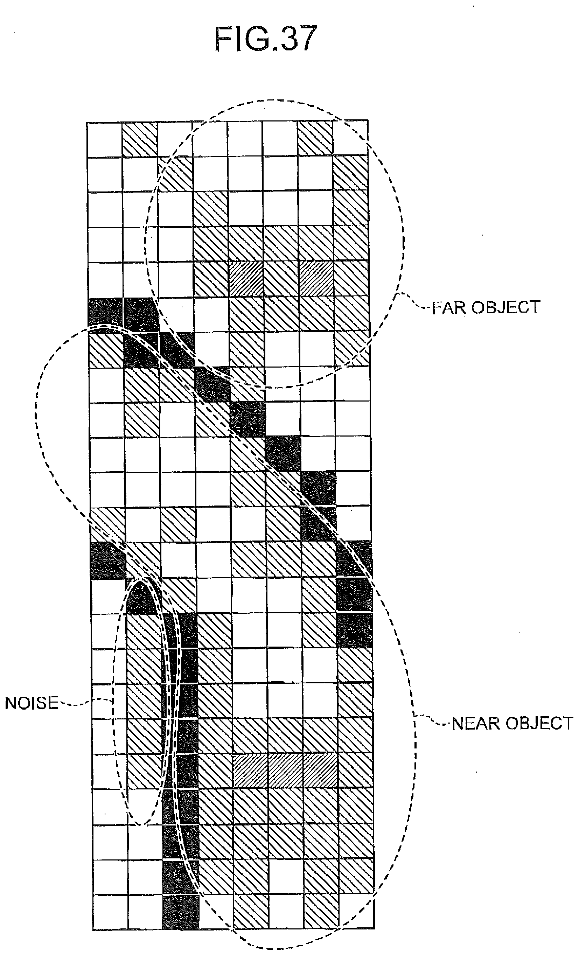

Because the correspondence between the disparity d and the thinned disparity in the layer U-map has been found out, the positions of the separation boundaries in the isolated region can be determined based on all the values of the thinned disparities. The black regions in FIG. 37 serve as the separation boundaries. At Step S165, the isolated region detecting unit 50 can separate the first preceding vehicle (object on the near side) traveling just ahead of the vehicle 1 from the second preceding vehicle (object on the far side) traveling ahead of the first preceding vehicle.

In the example in FIG. 37, a vertically elongated region is separated at the lower left of the isolated region. Because the separated vertically elongated region has a small width, the isolated region detecting unit 50 processes the region as noise. While the preceding vehicles in the example in FIG. 37 are traveling on the left-adjacent driving lane, the preceding vehicles may be traveling on the right-adjacent driving lane. In this case, the frequency map of the isolated region has distribution obtained by laterally inverting the example in FIG. 32.

In a case where a plurality of preceding vehicles are traveling on the far side of a driving lane adjacent to a driving lane on which the vehicle 1 is traveling, dispersion of the disparities obtained from the captured image is large. As a result, the disparities of the respective objects vertically extend and are connected to one another on the layer U-maps, whereby the objects may be erroneously detected as one object. By performing the vertical-direction separation, the isolated region detecting unit 50 can separate the object detected in a connected manner into a plurality of objects. In this example, the isolated region detecting unit 50 can separately recognize the first preceding vehicle traveling ahead and the second preceding vehicle traveling ahead of the first preceding vehicle.

After carrying out the vertical-direction separation, the isolated region detecting unit 50 performs processing at Step S143 in the flowchart in FIG. 21 to determine whether the vertical-direction separation has been .carried out on the object. If it is determined that the vertical-direction separation has been able to be carried out on the object (Yes at Step S143), further separation may be possible. In this case, the isolated region detecting unit 50 returns the process to Step S134 to attempt further vertical-direction separation. By contrast, if it is determined that the vertical-direction separation has failed to be carried out on the object (No at Step S143), the isolated region detecting unit 50 performs processing at Step S139 to register the object incapable of being separated by the vertical-direction separation in the storage unit, such as the RAM 15, as an object candidate.

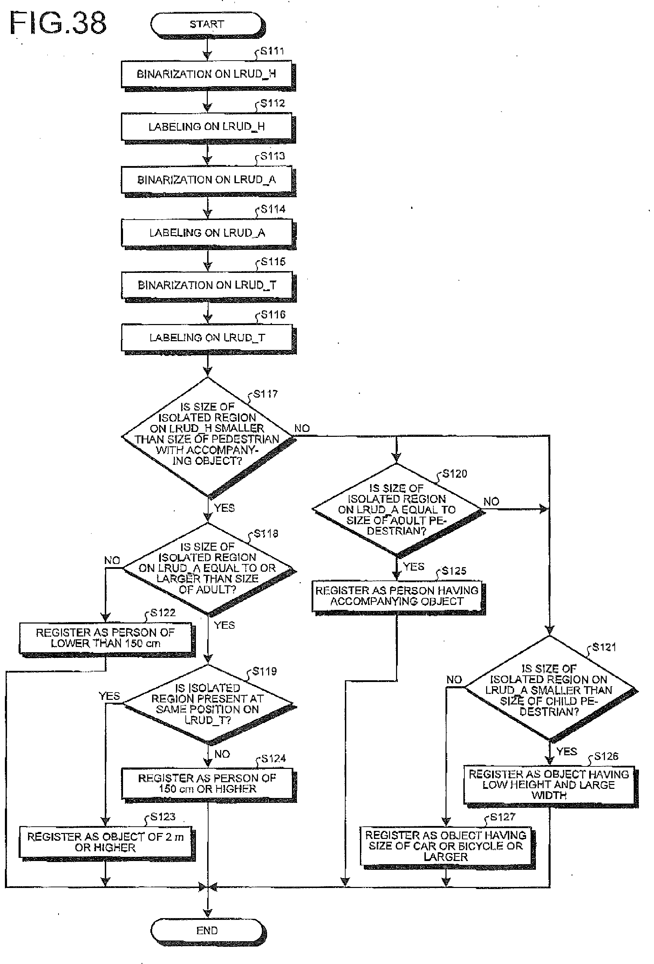

The flowchart in FIG. 38 illustrates a flow of the isolated region detection performed by the isolated region detecting unit 50 and a flow of object recognition performed by the classifying unit 51 based on the detected isolated region. In the flowchart in FIG. 38, processing from Step S111 to Step S116 corresponds to the flow of the isolated region detection performed by the isolated region detecting unit 50, and processing from Step S117 to Step S127 corresponds to the flow of the object recognition performed by the classifying unit 51.

In the description of the flowchart in FIG. 38, a layer U-map having thresholds defining a height range of 60 cm to 200 cm is referred to as "LRUD_H". A layer U-map having thresholds defining a height range of 150 cm to 200 cm is referred to as "LRUD_A". A layer U-map having a threshold defining a height range of 200 cm or higher is referred to as "LRUD_T".

At Step S111, the isolated region detecting unit 50 binarizes data of LRUD_H. At Step S112, the isolated region detecting unit 50 performs labeling on the binarized LRUD_H to detect an isolated region.

Similarly, at Step S113, the isolated region detecting unit 50 binarizes data of LRUD_A. At Step S114, the isolated region detecting unit 50 performs labeling on the binarized LRUD_A to detect an isolated region. At Step S115, the isolated region detecting unit 50 binarizes data of LRUD_T. At Step S116, the isolated region detecting unit 50 performs labeling on the binarized LRUD_T to detect an isolated region.

Because the range of LRUD_A (150 cm to 200 cm) is included in the range of LRUD_H (60 cm to 200 cm), the target of binarization and labeling performed on LRUD_A by the isolated region detecting unit 50 is limited to the isolated region detected on LRUD_H. This can omit redundant processing, thereby enabling high-speed binarization and labeling.

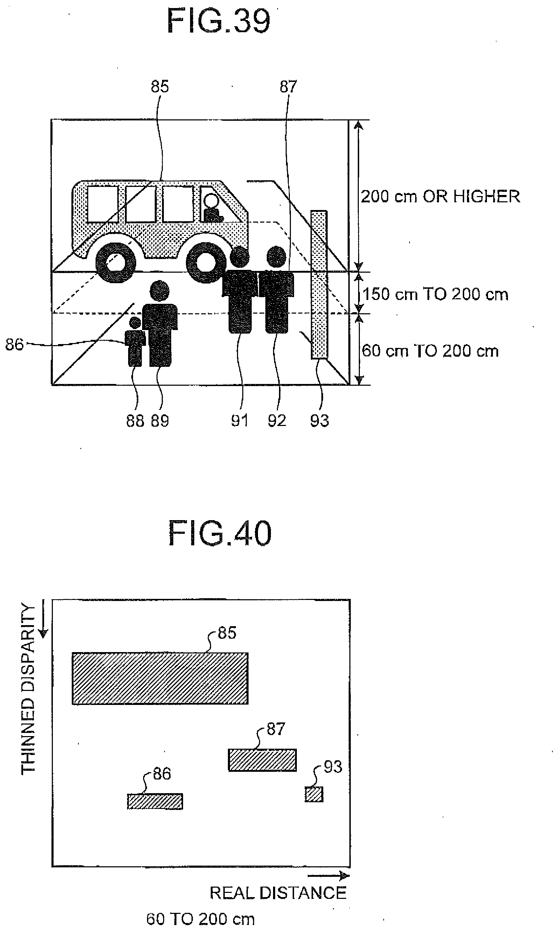

A specific example of the processing described above will be explained. FIG. 39 illustrates an example of a captured image. In the captured image illustrated in FIG. 39, a side surface of a vehicle 85 is present on the far side, a first person group 86 is present on the near left side, and a second person group 87 is present on the far side of the near right side. A utility pole 93 is present on the right side of the second person group 87.

The vehicle 85 has a real height from the road surface of equal to or higher than 150 cm and lower than 200 cm. The first person group 86 includes a child 88 and an adult 89. The child 88 has a real height from the road surface of lower than 150 cm, and the adult 89 has a real height from the road surface of equal to or higher than 150 cm and lower than 200 cm. The second person group 87 includes two adults 91 and 92 having real heights from the road surface of equal to or higher than 150 cm and lower than 200 cm. The utility pole 93 has a real height from the road surface of 200 cm or higher.

By casting votes from a disparity image corresponding to the captured image illustrated in FIG. 39 on a layer U-map having thresholds for 60 cm to 200 cm, a layer U-map illustrated in FIG. 40 is obtained. In the case of thresholds for 60 cm to 200 cm, the vehicle 85, the first and the second person groups 86 and 87, and the utility pole 93 are detected as isolated regions. While the first and the second person groups 86 and 87 include a plurality of persons (the child 88, the adult 89, the adult 91, and the adult 92), the groups are each detected as one isolated region in a connected manner.

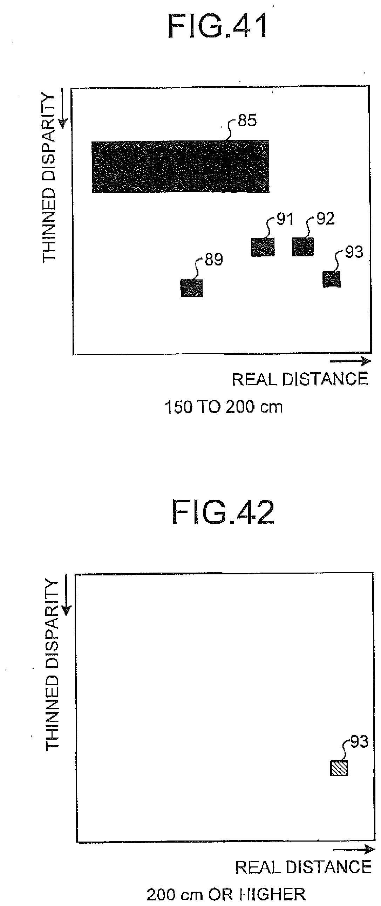

FIG. 41 illustrates a layer U-map obtained by casting votes from a disparity image corresponding to the captured image illustrated in FIG. 39 on a layer U-map having thresholds for 150 cm to 200 cm, In the case of thresholds for 150 cm to 200 cm, votes from the child 88 having a real height from the road surface of lower than 150 cm are not cast on the layer U-map. As a result, the adult 89 alone is detected as an isolated region. If the adults 91 and 92 in the second person group 87 are in contact with each other at a height from the road surface of lower than 150 cm, the adults 91 and 92 are detected as two isolated regions.

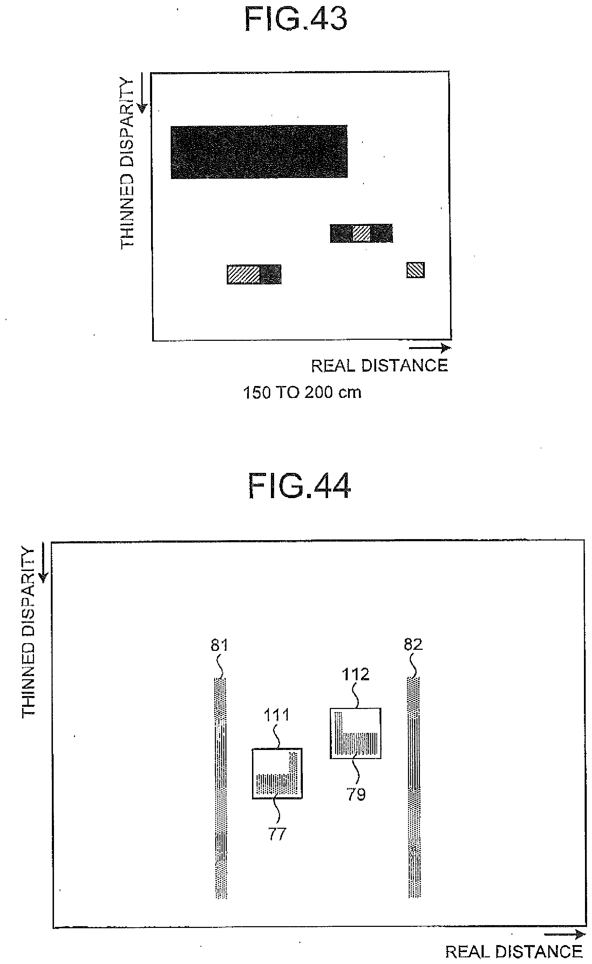

FIG. 42 illustrates a layer U-map obtained by casting votes from a disparity image corresponding to the captured image illustrated in FIG. 39 on a layer U-map having a threshold for 200 cm or higher. In the case of a threshold for 200 cm or higher, only the utility pole 93 is detected as an isolated region. By overlapping the objects Illustrated in FIGS. 40 to 42, a layer U-map illustrated in FIG. 43 is obtained. The isolated regions hatched by oblique lines extending to the lower left indicate the isolated regions detected from the layer U-map having thresholds for 60 cm to 200 cm. The black isolated regions indicate the isolated regions detected from the layer U-map having thresholds for 150 cm to 200 cm. The isolated region hatched by oblique lines extending to the lower right indicates the isolated region detected from the layer U-map having a threshold for 200 cm or higher.

After the isolated region detection is completed, the classifying unit 51 performs classification of the object type. After the isolated region detection is completed, the process proceeds to Step S117 in the flowchart in FIG. 38. At Step S117, the classifying unit 51 refers to object information stored in the storage unit, such as the RAM 15, to detect the type and the size of the objects of the isolated regions on LRUD_H. The object information is listed in Table 1 and Table 2. Specifically, as listed in Table 1, for example, the type of an object having a size of "smaller than 1100 mm in width, lower than 2500 mm in height, and larger than 1000 mm in depth" is defined as a motorcycle and a bicycle. The type of an object having a size of "smaller than 1100 mm in width, lower than 2500 mm in height, and equal to or smaller than 1000 mm in depth" is defined as a pedestrian.

The type of an object having a size of "smaller than 1700 mm in width, lower than 1700 mm in height, and smaller than 10000 mm in depth" is defined as a small car. The type of an object having a size of "smaller than 1700 mm in width, lower than 2500 mm in height, and smaller than 10000 mm in depth" is defined as a standard-sized car. The type of an object having a size of "smaller than 3500 mm in width, lower than 3500 mm in height, and smaller than 15000 mm in depth" is defined as a truck.

Table 1

| Object type | Width (mm) | Height (mm) | Depth (mm) |
|---|---|---|---|
| Motorcycle, bicycle | < 1100 | < 2500 | > 1000 |
| Pedestrian | < 1100 | < 2500 | $\leq$ 1000 |
| Small car | < 1700 | < 1700 | < 10000 |
| Standard-sized car | < 1700 | < 2500 | < 10000 |
| Truck | < 3500 | < 3500 | < 15000 |
| Others | Other than the sizes above | | |

Objects of the types of pedestrians are defined as follows. As listed in Table 2, for example, an object "smaller than 1200 mm in width, lower than 2000 mm in height, and smaller than 1200 mm in depth" is defined as an adult pedestrian. An object "smaller than 1200 mm in width, lower than 1500 mm in height, and smaller than 1200 mm in depth" is defined as a child pedestrian. An object "smaller than 2500 mm in width, lower than 1500 mm in height, and smaller than 2500 mm in depth" is defined as a pedestrian with an accompanying object.

Table 2

| Object type | Width (mm) | Height (mm) | Depth (mm) |
|---|---|---|---|
| Pedestrian (adult) | < 1200 | < 2000 | < 1200 |
| Pedestrian (child) | < 1200 | < 1500 | < 1200 |
| Pedestrian with accompanying object | < 2500 | < 1500 | < 2500 |
| Others | Other than the sizes above | | |

At Step S117, the classifying unit 51 determines whether the size of an isolated region on LRUD_H of a range of real heights from the road surface of 60 cm to 200 cm is smaller than the size of a pedestrian with an accompanying object listed in Table 2. The accompanying object is the child 88 in FIG. 39, for example. The isolated regions of the adults 89, 91, and 92 having heights in the range of 150 cm to 200 cm typically have widths of smaller than 1200 mm as listed in Table 2. By contrast, an isolated region corresponding to an adult pedestrian holding hands with a child serving as an accompanying object like the first person group 86 in FIG. 39 has a width of equal to or smaller than 2500 mm as listed in Table 2.

If the classifying unit 51 determines that the size of the isolated region on LRUD_H is equal to or larger than the size of a pedestrian with an accompanying object (No at Step S117), the classifying unit 51 performs processing at Steps S120 and S121. By contrast, if the classifying unit 51 determines that the size of the isolated region on LRUD_H is smaller than the size of a pedestrian with an accompanying object (Yes at Step S117), the classifying unit 51 performs processing at Step S118.

At Step S118, the classifying unit 51 determines whether the size of an isolated region on LRUD_A of a range of a real height from the road surface of 150 cm to 200 cm corresponding to the isolated region on LRUD_H is equal or larger than the size of an adult pedestrian listed in Table 2. If the child 88 of the first person group 86 in FIG. 39 has a height of lower than 150 cm (No at Step S118), the child 88 does not appear on LRUD_A of a range of a real height from the road surface of 150 cm to 200 cm as illustrated in FIG. 41. In this case, the classifying unit 51. performs processing at Step S122. At Step S122, the classifying unit 51 performs classification of the object type such that the object of the isolated region having the size of a pedestrian and not appearing on LRUD_A is identified as a child pedestrian having a height of lower than 150 cm. The classifying unit 51 temporarily registers the classification information in the storage unit, such as the RAM 15, in a manner associated with the object of the isolated region.

If the classifying unit 51 determines that the size of the isolated region on LRUD_A corresponding to the isolated region on LRUD_H is equal or larger than the size of an adult pedestrian listed in Table 2 (Yes at Step S118), the classifying unit 51 performs processing at Step S119. At Step S119, the classifying unit 51 compares isolated regions on LRUD_H of a range of a real height from the road surface of 60 cm to 200 cm illustrated in FIG. 40, for example, with isolated regions on LRUD_T of a range of a real height from the road surface of 200 cm or higher illustrated in FIG. 42. The classifying unit 51 detects an isolated region present at the same position out of the isolated regions on LRUD_H and the isolated regions on LRUD_T.

The isolated region of the utility pole 93 illustrated in FIG. 42, for example, is present at the same position on LRUD_H illustrated in FIG. 40 and LRUD_T illustrated in FIG. 42 (Yes at Step S119). At Step S123, the classifying unit 51 performs classification of the object type such that the object of the isolated region on LRUD_H is identified as an object having a height of 200 cm or higher, such as the utility pole 93. The classifying unit 51 temporarily registers the classification information in the storage unit, such as the RAM 15.

By contrast, if the positions of the isolated regions on LRUD_H are not identical with those of the isolated regions on LRUD_T (No at Step S119), the isolated regions on LRUD_H are objects in a range of 150 cm to 200 cm like the adults 89, 91, and 92 illustrated in FIG. 41, for example. At Step S124, the classifying unit 51 performs classification of the object type such that the objects on LRUD_H are identified as persons having heights of 150 cm or higher. The classifying unit 51 temporarily registers the classification information in the storage unit, such as the RAM 15.

If it is determined that the size of the isolated region on LRUD_H is equal to or larger than the size of a pedestrian with an accompanying object listed in Table 1 at Step S117, the classifying unit 51 performs processing at Step S120. At Step S120, the classifying unit 51 determines whether the size of an isolated region on LRUD_A corresponding to the isolated region determined to be equal to or larger than the size of a pedestrian with an accompanying object on LRUD_H is equal to the size of an adult pedestrian listed in Table 2. If the isolated region is a pedestrian with an accompanying object and if the child has a height of lower than 150 cm, the isolated region of the adult 89 having a height of 150 cm or higher alone appears on LRUD_A. If the size of the isolated region on LRUD_H is equal to or larger than the size of a pedestrian with an accompanying object and if the size of the isolated region on LRUD_A corresponding thereto is equal to the size of an adult pedestrian (Yes at Step S120), the classifying unit 51 classifies the isolated region on LRUD_A as a pedestrian having an accompanying object at Step S125. The classifying unit 51 temporarily registers the classification information in the storage unit, such as the RAM 15.

If it is determined that the size of the isolated region on LRUD_H is equal to or larger than the size of a pedestrian with an accompanying object at Step S117 (No at step S117), the classifying unit 51 also performs processing at Step S121. At Step S121, the classifying unit 51 determines whether the size of the isolated region on LRUD_A is smaller than the size of a child pedestrian listed in Table 2. If it is determined that the size of the isolated region on LRUD_A is smaller than the size of a child pedestrian (Yes at Step S121), the classifying unit 51 performs processing at Step S126. At Step S126, the classifying unit 51 performs classification of the object type such that the isolated region on LRUD_A is identified as an object having a low height and a large width, such as a guardrail. The classifying unit 51 temporarily registers the classification information in the storage unit, such as the PAM 15. By contrast, if it is determined that the size of the isolated region on LRUD_A is equal to or larger than the size of a child pedestrian (No at Step S121), the classifying unit 51 performs processing at Step S127. At Step S127, the classifying unit 51 performs classification of the object type such that the isolated region on LRUD_A is identified as an object having a size of equal to or larger than that of a person, such as a car, a motorcycle, a bicycle, a bus, or a truck. The classifying unit 51 temporarily registers the classification information in the storage unit, such as the RAM 15.

As described above, the classifying unit 51 determines the object types corresponding to the respective isolated regions based on the distribution of the isolated regions on the layer U-maps.

The following describes the flow of the object classification operation again. The first person group 86 illustrated in FIG. 39, for example, appears on the layer U-map (LRUD_H) of a range of a real height from the road surface of 60 cm to 200 cm as an isolated region having a size of equal to or larger than the size of a pedestrian as illustrated in FIG. 40. The first person group 86, however, appears, on the layer U-map (LRUD_A) of a range of a real height from the road surface of 150 cm to 200 cm as an isolated region having a size of equal to the size of an adult pedestrian as illustrated in FIG. 41. The classifying unit 51 registers the isolated region having a size larger than the size of a person on LRUD_H and equal to the size of a person on LRUD_A as a pedestrian having an accompanying object (Step S125).

By contrast, the second person group 87 illustrated in FIG. 39 appears on LRUD_H as one isolated region having a size of larger than the size of a person but appears on LRUD_A as two isolated regions each having a size of equal to the size of a person. As a result, the two isolated regions are registered as adult pedestrians having sizes of 150 cm or higher. A vehicle is detected as an isolated region having a size larger than the size of a person both on LRUD_H and LRUD_A, and the vehicle is registered as an object having a size of equal to or larger than the size of a person. The utility pole 93 illustrated in FIG. 39 is detected as an isolated region having the size of a person on both LRUD_H and LRUD_A. Because the utility pole 93 is also present on the layer U-map (LRUD_T) of a range of 200 cm or higher as an isolated region, the utility pole 93 is registered as an object having a height of 2 m or higher. As described above, the classifying unit 51 determines an isolated region detected in the layer U-maps to be a solid object candidate, performs classification of the object type based on the size and the correspondence relation among the layers (from LRUD_H to LRUD_T), and registers the classification information in the RAM 15 or the like.

The real width and the real height of an object in a disparity image can be calculated by the following expressions.

$$\text{Real Width} = \text{Distance to Object} \times (\text{Width of Object Region in Disparity Image})/f$$

$$\text{Real Height} = \text{Distance to Object} \times (\text{Height of Object Region in Disparity Image})/f$$

The depth of an object can be calculated by the following expression based on the minimum disparity dmin and the maximum disparity dmax of a rectangular region in a layer U-map.

$$\text{Depth} = BF \times (1/(\text{dmin} - \text{offset}) - 1/(\text{dmax} - \text{offset}))$$

Based on the pieces of information, the classifying unit 51 performs classification of the object type, such as a pedestrian, a bicycle, a small car, and a truck listed in Table 1.

The width of a rectangle surrounding an isolated region detected in the layer U-map corresponds to the width of the detected object, and the height thereof corresponds to the depth of the object. The height of the object is represented by the maximum value of the height in the layer U-map. The corresponding region detecting unit 52 illustrated in FIG. 4 detects a corresponding region in the disparity image corresponding to the isolated region detected in the layer U-map to detect the precise position and height of the object.

Specifically, a range (xmin, xmax) to be detected in the disparity image can be determined based on the position, the width, and the minimum disparity of the isolated region detected in the layer U-map. In the disparity image, the height and the position of the object (from a y-coordinate corresponding to the highest height from the road surface obtained when ymin = maximum disparity dmax is satisfied to y indicating the height of the road surface obtained when ymax = maximum disparity dmax is satisfied) can be determined. To detect the precise position of the object, the corresponding region detecting unit 52 scans a specified image region, thereby extracting, as candidate pixels, pixels having disparities in a range of the depth (the minimum disparity dmin, the maximum disparity dmax) of the rectangle detected as the isolated region. The corresponding region detecting unit 52 determines, out of the extracted candidate pixel group, a line including candidate pixels of equal to or more than a predetermined ratio in the horizontal direction with respect to the detection width to be a candidate line.

The regions including candidate lines are rectangles 111 and 112 surrounding the vehicles 77 and 79 as illustrated in FIG. 44, for example. The corresponding region detecting unit 52 performs vertical-direction scanning. If candidate lines are present at a density equal to or higher than a predetermined density around a line of interest, the corresponding region detecting unit 52 detects the line of interest as an object line.

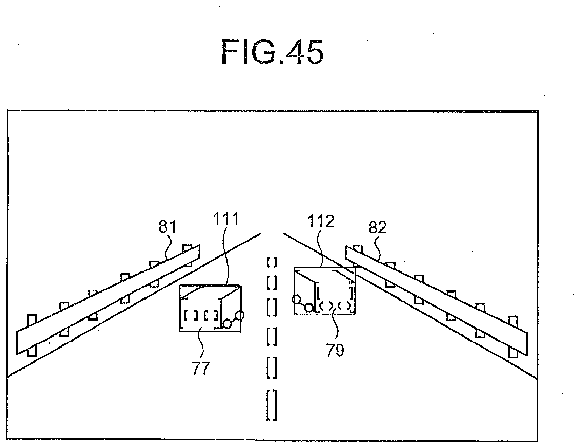

Subsequently, the region extracting unit 53 illustrated in FIG. 4 detects an object line in a search region in the disparity image and determines the lowermost end and the uppermost end of the object line. The region extracting unit 53 determines the circumscribed rectangles 111 and 112 of the object line groups as object regions in the disparity image as illustrated in FIG. 45.

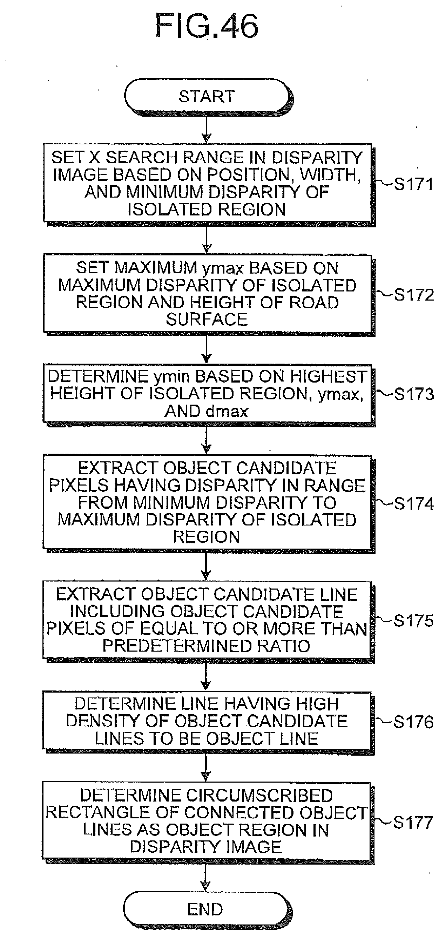

The flowchart in FIG. 46 illustrates a flow of the corresponding region detection performed on a disparity image by the corresponding region detecting unit 52 and the region extracting unit 53. At Step S171, the corresponding region detecting unit 52 determines a search range for x in the disparity image based on the position, the width, and the minimum disparity of an isolated region .in a layer U-map. At Step S172, the corresponding region detecting unit 52 finds the maximum search value ymax in the y-direction based on the relation between the maximum disparity dmax of the isolated region and the height of the road surface. At Step S173, the corresponding region detecting unit 52 finds the minimum search value ymin based on the highest height of the isolated region in the layer U-map, ymax, and dmax.

At Step S174, the corresponding region detecting unit 52 searches the specified search range in the disparity image to extract pixels in a range from the minimum disparity dmin to the maximum disparity dmax of the isolated region as object candidate pixels. At Step S175, the corresponding region detecting unit 52 extracts a line including object candidate pixels of equal to or more than the predetermined ratio in the horizontal direction as an object candidate line. At Step S176, the corresponding region detecting unit 52 calculates the density of the object candidate lines and determines a line having a density of higher than the predetermined value as an object line. At Step S177, the region extracting unit 53 detects a circumscribed rectangle of an object line group as an object region in the disparity image.

Subsequently, the three-dimensional position determining unit 54 illustrated in FIG. 4 determines the three-dimensional position of the object from the disparity information based on the distance to the object and the distance on the disparity image from the center of the disparity image to the center of the region of the object. Specifically, the three-dimensional position determining unit 54 calculates the horizontal position and the height position of the object relative to the image capturing unit 2 using the following expressions where (region_centerX, region_centerY) denotes the central coordinates of the region of the object on the disparity image and (image_centerX, image_centerY) denotes the image central coordinates of the disparity image.

$$\text{Horizontal Position} = Z \times (\text{region\_centerX} - \text{image\_centerX})/f$$

$$\text{Height Position} = Z \times (\text{region\_centerY} - \text{image\_centerY})/f$$

As described above, the mobile body control system according to the embodiment creates a plurality of layer U-maps in a layer structure based on information on the height of an object from the road surface. Specifically, the mobile body control system according to the embodiment casts votes from disparity points in a disparity image obtained by the image capturing unit 2 on the layer U-maps in a layer structure respectively set at different heights based on the real heights from the road surface. The mobile body control system performs grouping on two-dimensional planes in the respective layer U-maps and integrates or separates the grouping results.

When detecting an object from layer U-maps, the conventional technologies have erroneously detected a plurality of objects in a connected manner as one object because of erroneous detection in road surface detection, a. side effect of disparity interpolation, or an effect of dispersion of the disparities.

The mobile body control system according to the embodiment, however, uses real height information from the road surface and thus can divide connected objects, thereby detecting the respective objects with their correct sizes, positions, and distances. The mobile body control system thus can detect objects accurately at high speed. The mobile body control system can accurately detect objects, especially persons. Consequently, the mobile body control system can accurately control a vehicle using an onboard stereo camera (image capturing unit 2).

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

**Claims**

**1.** An image processing device (3) mounted on a vehicle (1), comprising:

a reference detecting unit (46) configured to detect a road surface serving as a reference for detecting the height of each object, using a first map generated by using a virtual line corresponding to the road surface detected in a state where the vehicle (1) is standing still and mapping only the pixels within a predetermined distance from the virtual line,

**characterized by**

a layer U-disparity map generating unit (49) configured to

generate a real U-disparity map where the horizontal axis indicates an actual distance and where the vertical line indicates the disparity value, wherein a point on the real U-disparity map corresponds to a point that has the same distance and the same disparity value on a disparity image,

to calculate a real height of a point from the road surface on the disparity image wherein voting of the point is to be cast,

to determine a layer to which the calculated real height corresponds out of plurality of layers set in advance, and to generate a layer map corresponding to the determined layer by casting vote of a preset height range on the real U-disparity map of the determined layer, and repeating the generation for a plurality of layer U-disparity maps;

an aggregated region detecting unit (50) configured to detect an aggregated region adapted to serve as a region of a cluster of disparity values equal to or larger than a predetermined threshold from the layer U-disparity maps; and

a classifying unit (51) configured to determine the object types corresponding to the respective aggregated regions based on the distribution of the aggregated regions on the layer U-disparity maps.

2. The image processing device (3) according to claim 1, wherein
   the classifying unit classifies the type of the object of the aggregated region based on a result of comparison between a reference size of the object set in advance and a size of the aggregated region and on the distribution of the aggregated region on the maps.

3. An image capturing device comprising:

   the image processing device (3) according to any one of claims 1 to 2;
   a plurality of image capturing devices; and
   a disparity image generating unit (42) configured to generate a disparity image from a plurality of images obtained by image capturing performed by the image capturing devices, the image processing device classifying a type of an object based on the disparity image generated by the disparity image generating unit.

4. A mobile body device control system comprising:

   the image capturing device according to claim 3,
   the mobile body device control system controlling a device based on the classified type of the object.

5. An image processing method for an image processing device (3) mounted on a vehicle (1), comprising:

   detecting, by a reference detecting unit (46), a road surface serving as a reference for detecting the height of each object, using a first map generated by using a virtual line corresponding to the road surface detected in a state where the vehicle (1) is standing still and mapping only the pixels within a predetermined distance from the virtual line,

   **characterized by**

   generating, by a layer U-disparity map generating unit (49), a real U-disparity map where the horizontal axis indicates an actual distance and where the vertical line indicates the disparity value, wherein a point on the real U-disparity map corresponds to a point that has the same distance and the same disparity value on a disparity image,

   calculating, by the layer U-disparity map generating unit (49), a real height of a point from the road surface on the disparity image wherein voting of the point is to be cast,

   determining, by the layer U-disparity map generating unit (49), a layer to which the calculated real height corresponds out of plurality of layers set in advance, and

   generating, by the layer U-disparity map generating unit (49), a layer U-disparity map corresponding to the determined layer by casting vote of a preset height range on the real U-disparity map of the determined layer and repeating the generation for a plurality of layer U-disparity maps,

   detecting, by an aggregated region detecting unit (50), an aggregated region adapted to serve as a region of a cluster of disparity values equal to or larger than a predetermined threshold from the layer U-disparity maps; and

determining, by a classifying unit (51), the object types corresponding to the respective aggregated regions based on the distribution of the aggregated regions on the layer U-disparity maps.

6. A computer-readable recording medium that contains an image processing program causing a computer to function as:

a reference detecting unit (46) configured to detect a road surface serving as a reference for detecting the height of each object, using a first map generated by using a virtual line corresponding to the road surface detected in a state where the vehicle (1) is standing still and mapping only the pixels within a predetermined distance from the virtual line,

**characterized by**

a layer U-disparity map generating unit (49) configured to

generate a real U-disparity map where the horizontal axis indicates an actual distance and where the vertical line indicates the disparity value, wherein a point on the real disparity map corresponds to a point that has the same distance and the same disparity value on a disparity image,

to calculate a real height of a point from the road surface on the disparity image, wherein voting of the point is is to be cast,

to determine a layer to which the calculated real height corresponds out of plurality of layers set in advance, and

to generate a layer U-disparity map corresponding to the determined layer by casting vote of a preset height range on the real U-disparity map of the determined layer and repeating the generation for a plurality of layer U-disparity maps;

an aggregated region detecting unit (50) configured to detect an aggregated region adapted to serve as a region of a cluster of disparity values equal to or larger than a predetermined threshold from the layer U-disparity maps; and

a classifying unit (51) configured to determine the object types corresponding to the respective aggregated regions based on the distribution of the aggregated regions on the layer U-disparity maps.

**Patentansprüche**

1. Bildverarbeitungsgerät (3), das auf einem Fahrzeug (1) montiert ist, enthaltend:

eine Referenzdetektionseinheit (46), die eingerichtet ist, eine als eine Referenz zum Detektieren der Höhe jedes Objekts dienende Straßenoberfläche zu detektieren, wobei sie eine unter Verwendung einer der Straßenoberfläche entsprechenden virtuellen Linie erzeugte erste Karte verwendet, die in einen Zustand detektiert wurde, in dem das Fahrzeug (1) stillsteht und die nur die Pixel innerhalb einer vorbestimmten Entfernung von der virtuellen Linie kartiert,

**gekennzeichnet durch**

eine Schichten-U-Disparitätskartenerzeugungseinheit (49), die eingerichtet ist, eine reale U-Disparitätskarte zu erzeugen, bei der die horizontale Achse eine tatsächliche Entfernung anzeigt und bei der die vertikale Linie den Disparitätswert anzeigt, wobei ein Punkt auf der realen U-Disparitätskarte einem Punkt entspricht, der denselben Abstand und denselben Disparitätswert auf einem Disparitätsbild aufweist,

eine reale Höhe eines Punktes von der Straßenoberfläche auf dem Disparitätsbild zu berechnen, wobei eine Bewertung des Punktes vorgenommen werden soll,

eine Schicht zu bestimmen, der die berechnete reale Höhe aus einer Mehrzahl im Voraus eingestellten Schichten entspricht und

eine der ermittelten Schicht entsprechende Schichtkarte zu erzeugen, indem eine Bewertung eines voreingestellten Höhenbereichs auf der realen U-Disparitätskarte der ermittelten Schicht vorgenommen wird und die Erzeugung für eine Mehrzahl Schichten-U-Disparitätskarten wiederholt wird;

eine Aggregationsregionsdetektionseinheit (50), die eingerichtet ist, eine aggregierte Region aus den Schichten-U-Disparitätskarten zu detektieren, die so angepasst ist, dass sie als eine Region einer Häufung von Disparitätswerten, die größer oder gleich einem vorbestimmten Schwellwert sind; und

eine Klassifizierungseinheit (51), die eingerichtet ist, die Objekttypen, die den jeweiligen aggregierten Regionen entsprechen, basierend auf der Verteilung der aggregierten Regionen auf den Schichten-U-Disparitätskarten zu ermitteln.

2. Bildverarbeitungsgerät (3) gemäß Anspruch 1, bei dem
die Klassifizierungseinheit den Typen des Objekts der aggregierten Region basierend auf einem Ergebnis eines Vergleichs zwischen einer Referenzgröße des Objekts, die im Voraus eingestellt worden ist, und einer Größe der aggregierten Region und auf der Verteilung der aggregierten Region auf den Karten klassifiziert.

3. Bildaufnahmegerät, enthaltend:

    das Bildverarbeitungsgerät (3) gemäß irgendeinem der Ansprüche 1 bis 2;
    eine Mehrzahl Bildaufnahmegeräte; und
    eine Disparitätsbilderzeugungseinheit (42), die eingerichtet ist, ein Disparitätsbild aus einer Mehrzahl durch von den Bildaufnahmegeräten durchgeführter Bildaufnahme erhaltener Bilder, wobei das Bildverarbeitungsgerät einen Typen eines Objekts basierend auf dem Disparitätsbild, das von der Disparitätsbilderzeugungseinheit erzeugt worden ist, klassifiziert.

4. Mobilkörpergerätsteuersystem, enthaltend:

    das Bildaufnahmegerät gemäß Anspruch 3,
    wobei das Mobilkörpergerätsteuersystem ein Gerät basierend auf dem klassifizierten Typ des Objekts steuert.

5. Bildverarbeitungsverfahren für ein Bildverarbeitungsgerät (3), das auf einem Fahrzeug (1) montiert ist, enthaltend:

    Detektieren, durch eine Referenzdetektionseinheit (46), einer Straßenoberfläche, die als eine Referenz zum Detektieren der Höhe jedes Objekts dient, wobei sie eine erst durch Verwendung einer der Straßenoberfläche entsprechenden virtuellen Linie erzeugte erste Karte, die in einem Zustand, in dem das Fahrzeug (1) stillsteht, erzeugt worden ist und nur die Pixel innerhalb eines vorbestimmten Abstands von der virtuellen Linie abbildet, **gekennzeichnet durch**
    Erzeugen, durch eine Schicht-U-Disparitätskartenerzeugungseinheit (49) einer realen U-Disparitätskarte, bei der die horizontale Achse einen tatsächlichen Abstand anzeigt und bei der die vertikale Linie einen Disparitätswert anzeigt, wobei ein Punkt auf der realen U-Disparitätskarte einem Punkt entspricht, der denselben Abstand und denselben Disparitätswert auf einem Disparitätsbild aufweist,
    Berechnen, durch die U-Disparitätskartenerzeugungseinheit (49), einer realen Höhe eines Punktes von der Straßenoberfläche auf dem Disparitätsbild, wobei eine Bewertung des Punktes vorgenommen werden soll,
    Ermitteln, durch die Schicht-U-Disparitätskartenerzeugungseinheit (49), einer Schicht, der die berechnete realen Höhe aus einer Mehrzahl in Vorhinein eingestellter Schichten entspricht, und
    Erzeugen, durch die Schicht-U-Disparitätskartenerzeugungseinheit (49), einer Schicht-U-Disparitätskarte, die der ermittelten Schicht entspricht, indem eine Bewertung eines voreingestellten Höhenbereichs auf der realen U-Disparitätskarte der ermittelten Schicht vorgenommen wird und die Erzeugung für eine Mehrzahl von Schicht-U-Disparitätskarten wiederholt wird,
    Detektieren, durch eine Aggregationsregionsdetektionseinheit (50), einer aggregierten Region aus den Schicht-U-Disparitätskarten, die angepasst ist, als eine Region einer Häufung von Disparitätswerten, die größer oder gleich einem vorbestimmten Schwellwert sind, zu dienen; und
    Ermitteln, durch eine Klassifizierungseinheit (51), der Objekttypen, die den jeweiligen aggregierten Regionen entsprechen, basierend auf der Verteilung der aggregierten Regionen auf den Schicht-U-Disparitätskarten.

6. Computerlesbares Aufzeichnungsmedium, das ein Bildverarbeitungsprogramm enthält, das einen Computer dazu veranlasst, zu funktionieren als:

    eine Referenzdetektionseinheit (46), die eingerichtet ist, eine als eine Referenz zum Detektieren der Höhe jedes Objekts dienende Straßenoberfläche zu detektieren, wobei sie eine unter Verwendung einer der Straßenoberfläche entsprechenden virtuellen Linie erzeugte erste Karte verwendet, die in einen Zustand detektiert wurde, in dem das Fahrzeug (1) stillsteht und die nur die Pixel innerhalb einer vorbestimmten Entfernung von der virtuellen Linie kartiert, **gekennzeichnet durch**
    eine Schichten-U-Disparitätskartenerzeugungseinheit (49), die eingerichtet ist, eine reale U-Disparitätskarte zu erzeugen, bei der die horizontale Achse eine tatsächliche Entfernung anzeigt und bei der die vertikale Linie den Disparitätswert anzeigt, wobei ein Punkt auf der realen U-Disparitätskarte einem Punkt entspricht, der denselben Abstand und denselben Disparitätswert auf einem Disparitätsbild aufweist,
    eine reale Höhe eines Punktes von der Straßenoberfläche auf dem Disparitätsbild zu berechnen, wobei eine Bewertung des Punktes vorgenommen werden soll,
    eine Schicht zu bestimmen, der die berechnete reale Höhe aus einer Mehrzahl im Voraus eingestellten Schichten entspricht und

eine der ermittelten Schicht entsprechende Schichtkarte zu erzeugen, indem eine Bewertung eines voreingestellten Höhenbereichs auf der realen U-Disparitätskarte der ermittelten Schicht vorgenommen wird und die Erzeugung für eine Mehrzahl Schichten-U-Disparitätskarten wiederholt wird;

eine Aggregationsregionsdetektionseinheit (50), die eingerichtet ist, eine aggregierte Region aus den Schichten-U-Disparitätskarten zu detektieren, die so angepasst ist, dass sie als eine Region einer Häufung von Disparitätswerten, die größer oder gleich einem vorbestimmten Schwellwert sind; und

eine Klassifizierungseinheit (51), die eingerichtet ist, die Objekttypen, die den jeweiligen aggregierten Regionen entsprechen, basierend auf der Verteilung der aggregierten Regionen auf den Schichten-U-Disparitätskarten zu ermitteln.

**Revendications**

1. Dispositif de traitement d'image (3) monté sur un véhicule (1), comprenant :

une unité de détection de référence (46) configurée pour détecter une surface de route servant de référence pour détecter la hauteur de chaque objet, en utilisant une première carte générée par l'utilisation d'une ligne virtuelle correspondant à la surface de route détectée dans un état où le véhicule (1) est statique et en cartographiant uniquement les pixels dans un rayon prédéterminé à partir de la ligne virtuelle,

**caractérisé par**

une unité de génération de carte de disparité U de couche (49) configurée pour
générer une carte de disparité U réelle où l'axe horizontal indique une distance effective et où la ligne verticale indique la valeur de disparité, dans lequel un point sur la carte de disparité U réelle correspond à un point qui a la même distance et la même valeur de disparité sur une image de disparité,
calculer une hauteur réelle d'un point par rapport à la surface de route sur l'image de disparité dans lequel un vote du point doit être exprimé,
déterminer une couche à laquelle la hauteur réelle calculée correspond parmi une pluralité de couches définies à l'avance, et
générer une carte de couche correspondant à la couche déterminée par l'expression d'un vote d'une plage de hauteurs prédéfinie sur la carte de disparité U réelle de la couche déterminée, et la répétition de la génération pour une pluralité de cartes de disparité U de couche ;
une unité de détection de région agrégée (50) configurée pour détecter une région agrégée adaptée pour servir de région d'un regroupement de valeurs de disparité supérieures ou égales à un seuil prédéterminé à partir des cartes de disparité U de couche ; et
une unité de classement (51) configurée pour déterminer les types d'objet correspondant aux régions agrégées respectives sur la base de la répartition des régions agrégées sur les cartes de disparité U de couche.

2. Dispositif de traitement d'image (3) selon la revendication 1, dans lequel
l'unité de classement classe les types de l'objet de la région agrégée sur la base d'un résultat de comparaison entre une taille de référence de l'objet définie à l'avance et une taille de la région agrégée et sur la répartition de la région agrégée sur les cartes.

3. Dispositif de capture d'image comprenant :

le dispositif de traitement d'image (3) selon l'une quelconque des revendications 1 ou 2 ;
une pluralité de dispositifs de capture d'image ; et
une unité de génération d'image de disparité (42) configurée pour générer une image de disparité à partir d'une pluralité d'images obtenues par capture d'image réalisée par les dispositifs de capture d'image, le dispositif de traitement d'image classant un type d'un objet sur la base de l'image de disparité générée par l'unité de génération d'image de disparité.

4. Système de commande de dispositif de corps mobile comprenant :

le dispositif de capture d'image selon la revendication 3,
le système de commande de dispositif de corps mobile commandant un dispositif sur la base du type classé de l'objet.

**EP 3 115 933 B1**

5. Procédé de traitement d'image pour un dispositif de traitement d'image (3) monté sur un véhicule (1), comprenant :

la détection, par une unité de détection de référence (46), d'une surface de route servant de référence pour détecter la hauteur de chaque objet, en utilisant une première carte générée par l'utilisation d'une ligne virtuelle correspondant à la surface de route détectée dans un état où le véhicule (1) est statique et en cartographiant uniquement les pixels dans un rayon prédéterminé à partir de la ligne virtuelle,

**caractérisé par**

la génération, par une unité de génération de carte de disparité U de couche (49) d'une carte de disparité U réelle où l'axe horizontal indique une distance effective et où la ligne verticale indique la valeur de disparité, dans lequel un point sur la carte de disparité U réelle correspond à un point qui a la même distance et la même valeur de disparité sur une image de disparité,

le calcul, par l'unité de génération de carte de disparité U de couche (49), d'une hauteur réelle d'un point par rapport à la surface de route sur l'image de disparité dans lequel un vote du point doit être exprimé,

la détermination, par l'unité de génération de carte de disparité U de couche (49), d'une couche à laquelle la hauteur réelle calculée correspond parmi une pluralité de couches définies à l'avance, et

la génération, par l'unité de génération de carte de disparité U de couche (49), d'une carte de disparité U de couche correspondant à la couche déterminée par l'expression d'un vote d'une plage de hauteurs prédéfinie sur la carte de disparité U réelle de la couche déterminée, et la répétition de la génération pour une pluralité de cartes de disparité U de couche ;

la détection, par une unité de détection de région agrégée (50), d'une région agrégée adaptée pour servir de région d'un regroupement de valeurs de disparité supérieures ou égales à un seuil prédéterminé à partir des cartes de disparité U de couche ; et

la détermination, par une unité de classement (51), des types d'objet correspondant aux régions agrégées respectives sur la base de la répartition des régions agrégées sur les cartes de disparité U de couche.

6. Support d'enregistrement lisible par ordinateur qui contient un programme de traitement d'image amenant un ordinateur à fonctionner comme :

une unité de détection de référence (46) configurée pour détecter une surface de route servant de référence pour détecter la hauteur de chaque objet, en utilisant une première carte générée par l'utilisation d'une ligne virtuelle correspondant à la surface de route détectée dans un état où le véhicule (1) est statique et en cartographiant uniquement les pixels dans un rayon prédéterminé à partir de la ligne virtuelle,

**caractérisé par**

une unité de génération de carte de disparité U de couche (49) configurée pour

générer une carte de disparité U réelle où l'axe horizontal indique une distance effective et où la ligne verticale indique la valeur de disparité, dans lequel un point sur la carte de disparité U réelle correspond à un point qui a la même distance et la même valeur de disparité sur une image de disparité,

calculer une hauteur réelle d'un point par rapport à la surface de route sur l'image de disparité dans lequel un vote du point doit être exprimé,

déterminer une couche à laquelle la hauteur réelle calculée correspond parmi une pluralité de couches définies à l'avance, et

générer une carte de disparité U de couche correspondant à la couche déterminée par l'expression d'un vote d'une plage de hauteurs prédéfinie sur la carte de disparité U réelle de la couche déterminée, et la répétition de la génération pour une pluralité de cartes de disparité U de couche ;

une unité de détection de région agrégée (50) configurée pour détecter une région agrégée adaptée pour servir de région d'un regroupement de valeurs de disparité supérieures ou égales à un seuil prédéterminé à partir des cartes de disparité U de couche ; et

une unité de classement (51) configurée pour déterminer les types d'objet correspondant aux régions agrégées respectives sur la base de la répartition des régions agrégées sur les cartes de disparité U de couche.

# FIG.1

# FIG.2

# FIG.3

# FIG.4

```
    ┌──────────┐2  ┌──────────┐41  ┌──────────┐42
    │ IMAGE    │   │PARALLELED│    │DISPARITY │
    │CAPTURING │──▶│ IMAGE    │──▶ │ IMAGE    │
    │ UNIT     │   │GENERATING│    │GENERATING│
    │          │   │  UNIT    │    │  UNIT    │
    └──────────┘   └──────────┘    └──────────┘
```

```
         ┌──────────┐45  ┌──────────┐46  ┌──────────┐47
         │ V-MAP    │    │  ROAD    │    │  LIST    │
         │GENERATING│──▶ │ SURFACE  │──▶ │GENERATING│
         │  UNIT    │    │  SHAPE   │    │  UNIT    │
         │          │    │DETECTING │    │          │
         │          │    │  UNIT    │    │          │
         └──────────┘    └──────────┘    └──────────┘
```

```
 ┌──────────┐48  ┌──────────┐49  ┌──────────┐50  ┌──────────┐51
 │ U-MAP    │    │LAYER U-MAP│   │ ISOLATED │    │          │
 │GENERATING│──▶ │GENERATING │──▶│  REGION  │──▶ │CLASSIFYING│
 │  UNIT    │    │  UNIT     │   │DETECTING │    │  UNIT    │
 │          │    │           │   │  UNIT    │    │          │
 └──────────┘    └──────────┘    └──────────┘    └──────────┘
```

```
  ┌──────────┐52  ┌──────────┐53  ┌──────────┐54
  │CORRESPOND-│   │          │    │  THREE-   │         OBJECT
  │ING REGION │──▶│  REGION  │──▶ │DIMENSIONAL│──▶     DETECTION
  │DETECTING  │   │EXTRACTING│    │ POSITION  │         RESULT
  │  UNIT     │   │  UNIT    │    │DETERMINING UNIT│
  └──────────┘    └──────────┘    └──────────┘
```

# FIG.5

# FIG.6

# FIG.7

# FIG.8

# FIG.9

## FIG.10

THINNED DISPARITY

81

82

79

77

REAL DISTANCE

## FIG.11

FIGURES IN PARENTHESES INDICATE HEIGHTS FROM ROAD SURFACE

(LOWER THAN 150 cm)
81

(LOWER THAN 150 cm)
82    —84
(150 cm OR HIGHER)

—83
(150 cm OR HIGHER)

77
(LOWER THAN 150 cm)

79
(150 cm OR HIGHER)

## FIG.12

## FIG.13

# FIG.14

# FIG.15

```
                    ┌─────────────┐
                    │    START    │
                    └─────────────┘
                           │
                           ▼               ╭S101
        ┌──────────────────────────────────────┐
        │  EXTRACT DISPARITY POINT FROM          │
        │  DISPARITY IMAGE AND CALCULATE         │
        │  CORRESPONDING POINT ON REAL U-        │
        │  MAP                                   │
        └──────────────────────────────────────┘
                           │
                           ▼               ╭S102
        ┌──────────────────────────────────────┐
        │  CALCULATE REAL HEIGHT (h) FROM        │
        │  ROAD SURFACE USING ROAD               │
        │  SURFACE DATA                          │
        └──────────────────────────────────────┘
                           │
                           ▼               ╭S103
            ◇─────────────────────────────◇
             ◇     REAL HEIGHT (h)       ◇
              ◇─────────────────────────◇
```

60 cm TO 200 cm     150 cm TO 200 cm     200 cm OR HIGHER

╭S105

CAST VOTES ON ADULT REGION
LAYER REAL U-DISPARITY MAP
(150 TO 200 cm)

╭S104

CAST VOTES ON PERSON REGION
LAYER REAL U-DISPARITY MAP
(60 TO 200 cm)

╭S106

CAST VOTES ON TWO-METER-OR-
HIGHER REGION LAYER REAL
U-DISPARITY MAP
(200 cm OR HIGHER)

```
                    ┌─────────────┐
                    │     END     │
                    └─────────────┘
```

# FIG.16

200 cm OR HIGHER

150 cm TO 200 cm

0 cm TO 200 cm

# FIG.17

THINNED DISPARITY

REAL DISTANCE

# FIG.18

REAL DISTANCE

60 TO 200 cm

# FIG.19

REAL DISTANCE

150 TO 200 cm

# FIG.20

THINNED DISPARITY

REAL DISTANCE

200 cm OR HIGHER

# FIG.21

```
                    ┌─────────────┐
                    │    START    │
                    └──────┬──────┘
                           │           ⌐S131
                    ┌──────▼──────┐
                    │  SMOOTHING  │
                    └──────┬──────┘
                           │           ⌐S132
                    ┌──────▼──────┐
                    │SET BINARIZATION│
                    │   THRESHOLD    │
                    └──────┬──────┘
                           │           ⌐S133
                    ┌──────▼──────┐
                    │ BINARIZATION │
                    └──────┬──────┘
                           │           ⌐S134
                    ┌──────▼──────┐
                    │   LABELING   │
                    └──────┬──────┘
                           │           ⌐S135
                   ◇───────▼───────◇
            YES    │    LARGER?     │
            ◄──────◇───────┬───────◇
                           │ NO        ⌐S136
                    ┌──────▼──────┐
                    │REMOVE PERIPHERAL│
                    │    REGION       │
                    └──────┬──────┘
                           │           ⌐S137
                   ◇───────▼───────◇   YES
                   │  IS ANOTHER    │──────►
                   │REMOVAL REGION  │
                   │   PRESENT?     │
                   ◇───────┬───────◇
                           │ NO        ⌐S138
                    ┌──────▼──────┐
                    │DETERMINE SIZE│
                    └──────┬──────┘
```

DETECTION OF CLUSTER

S140 — HORIZONTAL-DIRECTION SEPARATION

S141 — SEPARATED? — YES / NO

S142 — VERTICAL-DIRECTION SEPARATION

S143 — SEPARATED? — YES / NO

S139 — REGISTER AS OBJECT CANDIDATE

END

# FIG.22

| | X → |
|---|---|
| Y ↓ | |

| 1 | 2 | 3 |
|---|---|---|
| 4 | ✕ | |

# FIG.23

| | X → |
|---|---|
| Y ↓ | |

| 9 | - | 8 |
|---|---|---|
| 9 | ✕ | |

# FIG.24

# FIG.25

# FIG.26

# FIG.27

# FIG.28

# FIG.29

START

CALCULATE VERTICAL-
DIRECTION EVALUATION
VALUES ~S151

DETECT POSITION OF
SMALLEST EVALUATION
VALUE ~S152

SET BINARIZATION
THRESHOLD ~S153

BINARIZE EVALUATION
VALUES ~S154

DETECT SEPARATION
BOUNDARY ~S155

END

# FIG.30

FREQUENCY INFORMATION

HEIGHT INFORMATION

# FIG.31

EVALUATION
VALUE

T

BT

SR

SK

SK

# FIG.32

JR

# FIG.33

```
        ┌─────────────┐
        │    START    │
        └──────┬──────┘
               ↓
   ┌───────────────────────┐
   │   SET REAL WIDTH      │~S161
   │  CALCULATION REGION   │
   └───────────┬───────────┘
               ↓
   ┌───────────────────────┐
   │ CALCULATE HORIZONTAL- │~S162
   │  DIRECTION EVALUATION │
   │        VALUES         │
   └───────────┬───────────┘
               ↓
   ┌───────────────────────┐
   │    SET REAL WIDTH     │~S163
   └───────────┬───────────┘
               ↓
   ┌───────────────────────┐
   │ SET SEPARATION BOUNDARY│~S164
   └───────────┬───────────┘
               ↓
   ┌───────────────────────┐
   │      SEPARATION       │~S165
   └───────────┬───────────┘
               ↓
        ┌─────────────┐
        │     END     │
        └─────────────┘
```

# FIG.34

ACCUMULATION OF FREQUENCY VALUES

EVALUATION VALUE IS LARGEST

# FIG.35

REAL WIDTH

EVALUATION
VALUE IS LARGEST

# FIG.36

CENTER OF CAMERA

X

X0

Z

Z0

O

# FIG.37

FAR OBJECT

NOISE

NEAR OBJECT

FIG.38

START

S111
BINARIZATION ON LRUD_H

S112
LABELING ON LRUD_H

S113
BINARIZATION ON LRUD_A

S114
LABELING ON LRUD_A

S115
BINARIZATION ON LRUD_T

S116
LABELING ON LRUD_T

S117
IS SIZE OF ISOLATED REGION ON LRUD_H SMALLER THAN SIZE OF PEDESTRIAN WITH ACCOMPANYING OBJECT? — NO

YES

S118
IS SIZE OF ISOLATED REGION ON LRUD_A EQUAL TO OR LARGER THAN SIZE OF ADULT? — NO

S122
REGISTER AS PERSON OF LOWER THAN 150 cm

YES

S119
IS ISOLATED REGION PRESENT AT SAME POSITION ON LRUD_T? — YES

NO

S124
REGISTER AS PERSON OF 150 cm OR HIGHER

S123
REGISTER AS OBJECT OF 2 m OR HIGHER

S120
IS SIZE OF ISOLATED REGION ON LRUD_A EQUAL TO SIZE OF ADULT PEDESTRIAN? — NO

YES

S125
REGISTER AS PERSON HAVING ACCOMPANYING OBJECT

S121
IS SIZE OF ISOLATED REGION ON LRUD_A SMALLER THAN SIZE OF CHILD PEDESTRIAN? — NO

YES

S126
REGISTER AS OBJECT HAVING LOW HEIGHT AND LARGE WIDTH

S127
REGISTER AS OBJECT HAVING SIZE OF CAR OR BICYCLE OR LARGER

END

47

# FIG.39

85    87

200 cm OR HIGHER

150 cm TO 200 cm

86

60 cm TO 200 cm

88 89    91 92 93

# FIG.40

THINNED DISPARITY

85

87

86

93

REAL DISTANCE

60 TO 200 cm

# FIG.41

REAL DISTANCE

150 TO 200 cm

# FIG.42

REAL DISTANCE

200 cm OR HIGHER

49

# FIG.43

THINNED DISPARITY

REAL DISTANCE

150 TO 200 cm

# FIG.44

THINNED DISPARITY

81

82

112

111

79

77

REAL DISTANCE

# FIG.45

# FIG.46

START

SET X SEARCH RANGE IN DISPARITY IMAGE BASED ON POSITION, WIDTH, AND MINIMUM DISPARITY OF ISOLATED REGION ~S171

SET MAXIMUM ymax BASED ON MAXIMUM DISPARITY OF ISOLATED REGION AND HEIGHT OF ROAD SURFACE ~S172

DETERMINE ymin BASED ON HIGHEST HEIGHT OF ISOLATED REGION, ymax, AND dmax ~S173

EXTRACT OBJECT CANDIDATE PIXELS HAVING DISPARITY IN RANGE FROM MINIMUM DISPARITY TO MAXIMUM DISPARITY OF ISOLATED REGION ~S174

EXTRACT OBJECT CANDIDATE LINE INCLUDING OBJECT CANDIDATE PIXELS OF EQUAL TO OR MORE THAN PREDETERMINED RATIO ~S175

DETERMINE LINE HAVING HIGH DENSITY OF OBJECT CANDIDATE LINES TO BE OBJECT LINE ~S176

DETERMINE CIRCUMSCRIBED RECTANGLE OF CONNECTED OBJECT LINES AS OBJECT REGION IN DISPARITY IMAGE ~S177

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014096005 A
- WO 2012017650 PCT

- JP 2014096005 A
- JP 2015075800 A

**Non-patent literature cited in the description**

- **M. PERROLLAZ et al.** *International Journal of Robotics and Automation,* January 2014, vol. 29 (1), 1-26

- **ILOIE ALEXANDRU et al.** 2014 IEEE 10th International Conference on Intelligent Computer Communication and Processing (ICCP). IEEE, 04 September 2014, 119-125